# EUROPEAN PATENT SPECIFICATION

(11) **EP 0 279 430 B1**
(45) Date of publication and mention of the grant of the patent: **15.06.1994**
(21) Application number: 88102303.0
(22) Date of filing: 17.02.1988
(51) Int. Cl.: C08F 285/00, C08F 299/00, C08F 255/02

(54) **The method of manufacturing a grafted resin composition**
Verfahren zur Herstellung eines Pfropfpolymerisates
Méthode de fabrication d'une résine greffée

(30) Priority: 18.02.1987 JP 34941/87; 18.03.1987 JP 63187/87; 11.05.1987 JP 114022/87; 11.05.1987 JP 114023/87; 10.08.1987 JP 199613/87; 10.08.1987 JP 199614/87; 10.08.1987 JP 199616/87; 10.08.1987 JP 199617/87; 10.08.1987 JP 199619/87; 10.08.1987 JP 199620/87
(43) Date of publication of application: 24.08.1988
(73) Proprietor: NIPPON OIL AND FATS COMPANY, LIMITED, Chiyoda-ku Tokyo (JP)
(72) Inventor: Moriya, Yasuo, Taketoyo-Cho Chita-Gun Aichi-Prefecture (JP); Suzuki, Nobuyoshi, Taketoyo-Cho Chita-Gun Aichi-Prefecture (JP); Goto, Hiroshi, Taketoyo-Cho Chita-Gun Aichi-Prefecture (JP)
(74) Representative: Grünecker, Kinkeldey, Stockmair & Schwanhäusser Anwaltssozietät

(56) References cited:
- EP-A- 0 206 644
- FR-A- 2 357 598
- GB-A- 2 065 673
- US-A- 2 947 718
- PATENT ABSTRACTS OF JAPAN, vol. 12, no. 122 (C-488)[2969], 15th April 1988, page 66 C 488; & JP-A-62 243 645 (NIPPON OIL & FATS CO., LTD) 24-10-1987

## Description

This invention relates to a method of manufacturing a grafted resin composition, which is useful, for example, as adhesive, coating agent, quality improver, microdispersion promoter, polymer alloy precursor, functional molding material and agent for providing solubility to a polymer, and which permits a high grafting efficiency to be obtained.

Heretofore, ethylene polymers i.e. homopolymers, copolymers or mixtures thereof, have been used extensively owing to their excellent characteristics, and also there are attempts to improve their characteristics and use them in new fields.

For example, low density ethylene polymers have been used as molding material because of their moldability and satisfactory physical and chemical properties of their product.

It has been put into practice to mix vinyl polymers, e.g., polystyrene, with low density ethylene polymers as molding material, in order to improve, for instance, the rigidity, dimensional stability and printing property of the low density ethylene polymers.

Further, it is well known in the art that epoxy-group-containing olefin copolymers provide a satisfactory adhesive force as adhesive to bond together metal and plastic materials due to their polarity. Further, since they have elasticity and reactive properties, they are used as condensation series polymers ; particularly, they are used as impact improving agents by being reacted with engineering plastics.

Further, since the ethylene-(meth) acrylic ester copolymers and -olefin-vinyl ester copolymers have an excellent flexibility, weather-proof property and impact resistance, they are extensively used as molding material, and -olefin-vinyl ester copolymers are also broadly used for hot-melt adhesives. Further, recently there have been attempts to use both copolymers as impact resistance improving agents for engineering plastics.

Further, since ethylene-propylene copolymer rubbers and ethylene-propylene-diene copolymer rubbers have an excellent rubber elasticity, flexibility, coldness-proof property and weather-proof property, they are extensively used as rubber material, and also recently there are attempts to use them as impact resistance improving agents for engineering plastics.

However, since olefin (co-and/or) polymers and vinyl polymers are not satisfactorily compatible with each other, it is not practicable to incorporate more than 10 % by weight of vinyl copolymer. Usually, the vinyl polymer is incorporated only in an amount of 0.2 to 5 % by weight. Even when such a small quantity of vinyl copolymer is mixed, the impact resistance of the mixtures is reduced due to the unsatisfactory mutual solubility of the two resins, and also the appearance is liable to deteriorate.

Further, when ethylene copolymers are used as impact resistance improving agent, a sufficient impact resistance improvement effect cannot be obtained because of the low mutual solubility and dispersion property.

In case of the epoxy-group-containing olefin copolymer, the scope of applications is limited to materials which can react with the epoxy group. Therefore, a sufficient adhesive force often cannot be obtained with materials which do not react with the epoxy group, e.g., vinyl copolymers, or a sufficient impact resistance cannot be obtained due to a low dispersion force with respect to the materials.

Therefore, there have been attempts to increase the compatibility with engineering plastics.

For example, there have been attempts to increase the compatibility with the engineering plastics by increasing the proportion of the ethylene-(meth) acrylic ester copolymers component and the a-olefin-vinyl ester copolymer component with respect to the (meth) acrylic ester or vinyl ester.

A block copolymer obtained by radically copolymerizing a (meth)acrylic acid ester with a radical polymerizable organic peroxide and further copolymerizing a vinyl monomer with said (meth)acrylic ester is disclosed in EP-A-0 20 66 44.

Further, it has been attempted to introduce functional groups such as epoxy group, carboxyl group and acid anhydride group for reaction with residual functional groups of engineering plastics, particularly, condensation engineering plastics to increase the compatibility and improve the impact resistance improvement effect. In the meantime, it is well-known in the art that graft copolymers, in which a polymer having a high compatibility with other resins and a functional polymer are chemically combined in a molecule, are preferred to improve the compatibility with respect to other resins.

Generally, as a method of grafting combining a vinyl polymer with an olefin polymer, there has been proposed an olefin polymer, which is obtained by graft polymerizing a vinyl monomer, e.g., a styrene monomer, with an olefin polymer by irradiation with ionizable radiation. This method provides considerable effects for causing a uniform dispersion of the vinyl copolymer in the olefin polymer. A further well-known method is the liquid graft polymerization method making use of a solvent such as xylene or toluene. Another method is the emulsification graft polymerization method.

Further, it has been proposed to impregnate olefin polymer particles with vinyl monomers and cause polymerization of the resultant system using an aqueous suspension (as disclosed in Japanese Patent Publication Sho 58-51010 and Japanese Patent Publication sho 58-53003). According to this method, the vinyl polymer is uniformly mixed in the polymerized resin composition. With this method, satisfactory results can be obtained in comparison to other methods.

More specifically, the method of irradiation with ionizable radiant rays is based on a special process of a radiation graft polymerization process. Therefore, this method is not economical and difficult to be put into practice. Further, in this method there is a limitation in the amount of vinyl monomers to be introduced.

Further, in the solution graft polymerization process, the polymerization is carried out in a state, in which the system to be graft polymerized is diluted with a large quantity of solvent. From the standpoint of the compatibility of the olefin polymer, there is less opportunity of contact of vinyl monomers, polymerization initiators, and olefin polymers with one another, and generally the reaction efficiency of the vinyl monomers is low. Further, complicated after-treatment steps of the vinyl monomers are necessary, which is economically disadvantageous.

A further method is the emulsified graft polymerization process. In this case, the reaction is limited only to the on-surface reactions of the olefin polymer particles. In the process of polymerization in a water suspension, the grafting efficiency of the resin composition obtained by this process is low. Therefore, vinyl polymer particles which have been uniformly dispersed at the end of the completion of the polymerization, are liable to be aggregated secondarily due to heating in the secondary processing or on contact with the solvent, thus giving rise to problems when using the obtained resin composition as microdispersion promoters, compatibilizers of polymer alloys and agents for providing polymer compatibility.

It is the object of the present invention to provide a method for manufacturing a resin composition which has a high grafting efficiency with respect to the olefin polymer or polymers and vinyl polymer or polymers.

According to the present invention, this object is attained with a method of manufacturing a grafted resin composition by causing a grafting reaction of a graft polymerization precursor or a mixture consisting of 1 to 99% by weight of said graft polymerization precursor and 99 to 1% by weight of a polymer by melting said graft polymerization precursor or said mixture at a temperature of 100 to 300 _{°} C and kneading it, said graft polymerization precursor being a resin composition prepared by
suspending (A) 100 parts by weight of ethylene homopolymer, copolymer or a mixture thereof in water,
adding to the resultant suspension a solution obtained by dissolving in (B) 5 to 400 parts by weight of one or more vinyl monomers selected from the group consisting of vinyl aromatic monomers, acrylic or methacrylic ester monomers or mixtures thereof, acrylonitrile, methacrylonitrile or mixtures thereof and vinyl ester monomers, (C) from 0.1 to 10 parts by weight with respect to 100 parts by weight of said vinyl monomers (B) of one or more radical polymerizable organic peroxides represented by general formula (I) 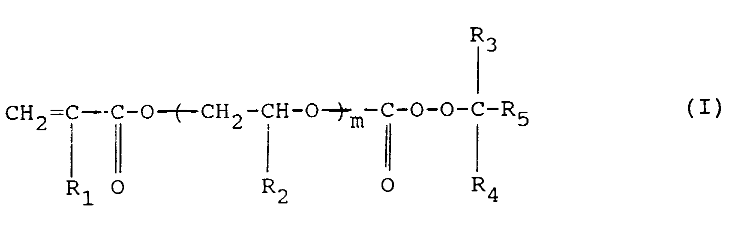 wherein R₁ represents a hydrogen atom or a C₁ -₂ alkyl group, R₂ represents a hydrogen atom or a methyl group, R₃ and R₄
represent C₁ -₄ alkyl groups, R₅ represents an alkyl, phenyl or alkyl-substituted phenyl group containing 1 to 12 carbon atoms or a Ca-, cycloalkyl group, and m is 1 or 2, or represented by general formula 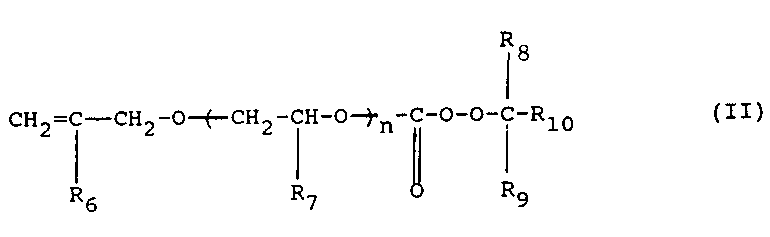 wherein R₆ represents a hydrogen atom or a C₁ -₄ alkyl group, R₇ represents a hydrogen atom or a methyl group, R₈ and Rg represent C, -₄. alkyl groups, R₁₀ represents an alkyl, phenyl or alkyl-substituted phenyl group or a Ca-, cycloalkyl group, and n is 0, 1 or 2,
and (D) a radical polymerization initiator with a decomposition temperature of 40 to 90 _{°} C for obtaining a half reduction period of 10 hours such that it constitutes 0.01 to 5 parts by weight per 100 parts by weight of the sum of said vinyl monomers (B) and said radical polymerizable organic peroxide (C),
heating the resultant mixture to less than the decomposition temperature of said initiator (D) until said ethylene polymer (A) is impregnanted with at least 50% by weight of said vinyl monomers (B), radical polymerizable organic peroxide (C) and radical polymerization initiator (D), and
elevating the temperature of said water suspension to cause polymerization of said vinyl monomers (B) and said radical polymerizable organic peroxide (C) in said ethylene polymer (A) so that the vinyl/peroxide copolymer contains 0.01 to 0.73% by weight of active oxygen, said polymer forming the mixture with said graft polymerization precursor being either one or both members of a group consisting of (i) ethylene homopolymer, copolymer or mixtures thereof and (ii) a vinyl polymer obtained through polymerization of one or more members of a group consisting of aromatic vinyl monomers, acrylic or methacrylic ester monomers or mixtures thereof, methacrylonitrile, acrylonitrile or mixtures thereof and vinyl ester monomers.

Examples of the ethylene polymer according to the invention are low-density ethylene polymers, epoxy-group-containing ethylene copolymers obtained through ethylene and (meth) acrylicglycidyl esters, ethylene copolymers consisting of ethylene and (meth) acrylic ester, ethylene copolymers consisting of ethylene and vinyl ester, ethylene-propylene copolymer rubbers and ethylene-propylene-diene copolymer rubbers.

The low density ethylene polymer useful in the invention has preferably a density of 0.910 to 0.935 g/cm, and specific examples are an ethylene polymer obtained by the high pressure polymerization process and copolymers of ethylene and a-olefin for density control, e.g., propylene, butene-1, and pentene-1.

The low density ethylene polymer may be in the form of pellets with diameters of 1 to 5 mm or in a powdery form. These shapes may be suitably selected according to the proportion of low density ethylene polymer in the graft polymerization precursor. For example, when the proportion of the low density ethylene polymer in the graft polymerization precursor is 50 % by weight or above, pellets are suitable. If it is less than 50 % by weight, it may be in the powder form. The epoxy-group-containing ethylene copolymer useful in the invention is preferably obtained through copolymerization of ethylene and glycidyl (meth) acrylate. Glycidyl (meth) acrylate is preferably incorporated for copolymerization in an amount of 0.5 to 40 % by weight, preferably 2 to 20 % by weight. If the ratio is less than 0.5 % by weight, a sufficient effect cannot be obtained when the precursor is used as impact resistance promoter. If the ratio exceeds 40 % by weight, the fluidity when the precursor is melted is reduced. When the ratio of glycidyl (meth) acrylate is less than 40 % by weight, it is possible to select for copolymerization one or more members of the group consisting of (meth) acrylic ester monomers, e.g., methyl (meth) acrylate, vinyl ester monomers, e.g., vinyl acetate and vinyl propionate, other vinyl monomers, (meth) acrylonitrile, vinyl aromatic monomers and carbon monoxide in accordance with the invention. Examples of the epoxy-group-containing copolymer are ethylene glycidyl methacrylate copolymer, ethylene-vinyl acetate glycidyl methacrylate copolymer, ethylene-carbon monoxide glycidyl methacrylate copolymer, ethylene glycidyl acrylate copolymer and ethylene vinyl acetate glycidyl acrylate copolymer. Among these examples, ethylene-glycidyl methacrylate copolymer is most preferred.

The epoxy-group-containing ethylene copolymers noted above may be used in combination.

The epoxy-group-containing ethylene copolymer may be in the form of particles or pellets with diameters ranging from 0.1 to 5 mm. These shapes are suitably selected according to the proportion of epoxy-group-containing ethylene copolymer. If the diameter is excessively large, not only the dispersion is difficult at the time of the impregnation, but, e.g., also the period of impregnation of vinyl monomer is extended. Examples of ethylene-(metha-and/or) acrylic ester copolymers are an ethylene-(metha-and/or) acrylic methyl copolymer, ethylene-(metha-and/or) acrylic ethyl copolymer and ethylene-(metha-and/or) acrylic butyl copolymer. Of these example, the ethylene-acrylic ethyl copolymer is most suited.

In the ethylene-(meth) acrylic ester copolymer, the (meth) acrylic ester copolymer is preferably present in an amount of 1 to 50 % by weight, preferably 2 to 40 % by weight. If the copolymerization ratio is 1 % by weight or less, a sufficient effect cannot be obtained when the precursor is used as impact resistance promoter. If the ratio exceeds 50 % by weight, the moldability is reduced. The shape and proportion of the ethylene-(meth) acrylic ester copolymer are like those of the epoxy-group-containing ethylene copolymer.

The ethylene-vinyl ester copolymer useful in the invention is preferably obtained through copolymerization of ethylene and one of more vinyl ester monomers selected from the group consisting of vinyl propionate, vinyl acetate, vinyl caprylate, vinyl laurate, vinyl stearate and vinyl trioflouroacetate in the presence of a radical polymerization initiator. Of these examples, an ethylene-vinyl acetate copolymer is most suited. The copolymerization ratio of the vinyl ester monomers in the ethylene-vinyl ester copolymer is the same as that of the (meth) acrylic ester copolymer in the ethylene-(meth) acrylic ester copolymer.

The shape and proportion of the ethylene-vinyl ester copolymer are like those of the ethlene-(meth) acrylic ester copolymer.

The ethylene-propylene copolymer rubber or ethylene-propylene-diene copolymer rubber may be an ethlene-propylene copolymer rubber, which preferably contains 40 to 80 % by weight of ethylene and 60 to 20 % by weight of propylene and which has a Mooney viscocity of 15 to 90, and a ternary copolymerized rubber, which is preferably composed of 40 to 80 % of ethylene and 60 to 20 % by weight of propylene and which contains a non-conjugated diene component selected from ethylidene norbornene, 1, 4-hexadiene and dicyclopentadiene. Suitably, its diene content is 4 to 30 in terms of iodination, and its Mooney viscocity is 15 to 120. The Mooney viscocity is obtained in conformity with JISK 6300 (100 _{°} C).

These ethylene-propylene copolymer rubbers and ethylene-propylene-diene copolymer rubbers may also be used as their mixtures. To facilitate the impregnation of vinyl monomers and prevent aggregation at the time of suspension polymerization, the particles of the ethylene-propylene copolymer rubber or the ethylene-propylene-diene copolymer rubber are suitably pellets in a narrow diameter range and with diameters of 2 to 8 mm. If the diameter is excessive, not only the dispersion at the time of the impregnation, but also the speed of impregnation of vinyl monomers is reduced to extend the reaction time. Specific examples of the vinyl monomer according to the invention are vinyl aromatic monomers, e.g., styrene, nucleus substituted styrene, e.g., methyl styrene, dimethyl styrene, ethyl styrene, isopropyl styrene and chloro-substituted styrene, a-substituted styrenes, e.g., a-methyl styrene (meth) acrylic ester monomers, e.g., alkyl esters with a carbon number of 1 to 7 of (meth) acrylic acid, (meth) acrylonitrile, and vinyl ester monomers, e.g., vinyl propionate, vinyl acetate, vinyl caproate, vinyl caprylate, vinyl laurate, vinyl stearate and vinyl trifluoroacetate.

Further, it is possible to use halogenated vinyl and vinylidene (particularly, vinyl chloride and vinylidene chloride), vinyl naphthalene, vinyl carbazole, acrylamide, methacrylamide, maleic anhydride, and others. These components may be used either alone or in combination. Of these compounds, vinyl aromatic monomers and (meth) acrylic ester monomers are preferred. Preferably, 50% or more by weight of the vinyl monomers consists of vinyl aromatic monomers, (meth)acrylic ester monomers, or mixtures of the latter.

Particularly, in application as impact resistance improvement agents for engineering plastics, it is desirable to use the reaction product of the (co-and/or) polymerization of mixtures containing 50 % or above of vinyl aromatic monomers and (meth) acrylic ester monomers. The reason is that it has a satisfactory solubility in engineering plastics.

Particularly, hydrophilic or solid vinyl monomers are suitably dissolved in monomers soluble with respect to oil when they are used. In the preparation of the graft polymerization precursor the vinyl monomers are suitably incorporated in an amount of 5 to 400 parts by weight, preferably 10 to 200 parts by weight, with respect to 100 parts by weight of the ethylene polymer. If the amount is less than 5 parts by weight, it is difficultly to obtain a sufficient graft performance in spite of the fact that the graft after the grafting reaction has a high grafting efficiency.

When the amount exceeds 400 parts by weight, the proportion of the vinyl monomer, radical polymerizable organic peroxide represented by the formulae I and II and radical polymerization initiator that is not impregnating the ethylene polymer is liable to exceed 50 % by weight, thus increasing the amount of free vinyl monomers in the system.

According to Japanese Patent Publication Sho 58-51010 or Japanese Patent Publication Sho 58-53003, it is taught that in the water suspension polymerization process it is necessary that the amount of free vinyl monomers is less that 20 % by weight.

According to the invention, however, the graft polymerization precursor has a peroxide group in its vinyl polymer molecule and has a grafting function. Therefore, a sufficiently excellent grafting function can be obtained even if the sum of free vinyl monomers, radical polymerizable organic peroxide represented by formula I or II is above 20 % by weight as long as its content is less than 50 % by weight.

The radical polymerizable organic peroxide which is used in accordance with the invention, is represented by formula I or II.

Specific examples of the compound represented by the formula I are t-butylperoxyacryloyloxyethyl carbonate, t-amylperoxyacryloyloxyethyl carbonate, t-hexylperoxyacryloyloxyethyl carbonate, 1, 1, 3, 3-tetramethylethylbutylperoxyacryloyloxyethyl carbonate, cumylperoxyacryloyloxyethyl carbonate, p-isopropylcumylperoxyacryloyloxyethyl carbonate, t-butylperoxymethacryloyloxyethyl carbonate, t-amylperoxymethacryloyloxyethyl carbonate, t-amylperoxymethacryloyloxyethyl carbonate, t-hexylperox- ymethacryloyloxyethyl carbonate, 1, 1, 3, 3-tetramethylbutylperoxymethacryloyloxyethyl carbonate, cumyl- peroxymethacryloyloxyethyl carbonate, p-isopropylcumylperoxymethacryloyloxyethyl carbonate, t-butyl- peroxyacryloyloxyethoxyethyl carbonate, t-amylperoxyacryloyloxyethoxyethylcarbonate, t-hexylperox- yacryloyloxyethoxyethyl carbonate, 1, 1, 3, 3-tetramethylbutylperoxyacryloyloxyethoxyethyl carbonate, cumylperoxyacryloyloxyethoxyethyl carbonate, p-isopropylcumylperoxyacryloyloxyethoxyethyl carbonate, t-butylperoxymethacryloyloxyethoxyethyl carbonate, t-amylperoxymethacryloyloxyethoxyethyl carbonate, t-hexylperoxymethacryloyloxyethoxyethyl carbonate, 1, 1, 3, 3-tetramethylbutylperoxymethacryloyloxyethoxyethyl carbonate, cumylperoxymethacryloyloxyethoxyethyl carbonate, p-isopropylcumylperoxymethacryloyloxyethoxyethyl carbonate, t-butylperoxyacryloyloxyisopropyl carbonate, t-amylperoxyacryloyloxyisopropyl carbonate, t-hexylperoxyacryloyloxyisopropyl carbonate, 1, 1, 3, 3-tetramethylbutylperoxyacryloyloxyisopropyl carbonate, cumylperoxyacryloyloxyisopropyl carbonate, p-isopropylcumylperoxyacryloyloxyisopropyl carbonate, t-butylperoxymethacryloyloxyisopropyl carbonate, t-amylperoxymethacryloyloxyisopropyl carbonate, t-hexylperoxymethacryloyloxyisopropyl carbonate, 1, 1, 3, 3-tetramethylbutylperoxymethacryloyloxyisopropyl carbonate, 1, 1, 3, 3-tetramethylbutylperoxymethacryloyloxyisopropyl carbonate, cumylperoxymethacryloyloxyisopropyl carbonate, p-isopropylcumyl- peroxymethacryloyloxyisopropyl carbonate.

Specific examples of the compound represented by the formula II are t-butylperoxyallyl carbonate, t-hexylperoxyallyl carbonate, 1, 1, 3, 3-tetramethylbutylperoxyallyl carbonate, p-menthanperoxyallyl carbonate, t-butylperoxymethallyl carbonate, t-amylperoxymethallyl carbonate, t-hexylperoxymethallyl carbonate, 1, 1, 3, 3-tetramethylbutylperoxymethallyl carbonate, p-menthanperoxymethallyl carbonate, cumylperox- ymethacryl carbonate, t-amylperoxyallyloxyethyl carbonate, t-hexylperoxyacryloxyethyl carbonate, t-butyl- peroxymethallyloxyethyl carbonate, t-amylperoxymethallyloxyethyl carbonate, t-hexylperoxymethallylox- yethyl carbonate, t-butylperoxyallyloxyisopropyl carbonate, t-amylperoxyallyloxyisopropyl carbonate, t-hex- ylperoxyallyloxyisopropoyl carbonate, t-butylperoxymethacryloxyisopropyl carbonate, t-amylperoxymethal- lyloxyisopropyl carbonate and t-hexylperoxymethallyloxyisopropyl carbonate.

Among these compounds, t-butylperoxyacryloyloxy ethyl carbonate, t-butylperoxymethacryloyloxyethyl carbonate, t-butylperoxyallyl carbonate and t-butylperoxymethallyl carbonate are preferred.

The radical polymerizable organic peroxide is incorporated in an amount of 0.1 to 10 parts by weight with respect to 100 parts by weight of vinyl monomers.

When the proportion is less than 0.1 parts by weight, the amount of active oxygen in the graft polymerization precursor according to the invention is insufficient, so that a sufficient grafting function is difficult to achieve.

When the amount exceeds 10 parts by weight, the radical polymerizable organic peroxide is inductively decomposed during the polymerization, so that a large amount of gel is generated in the graft polymerization precursor at the instant of the end of the grafting reaction. Further, although the grafting capacity of the graft polymerization precursor is increased, the gel formation capacity is also increased, which is undesirable. With the radical polymerization initiator which is used in the preparation of the graft polymerization precursor used in the invention, the decomposition temperature for obtaining a half reduction period of 10 h (hereinafter referred to as 10-h half reduction period) is 40 to 90 _{°} C, preferably 50 to 75 _{°} C.

The polymerization in the preparation of the graft polymerization precursor according to the invention, has to be carried out under such a condition that the radical polymerizable organic peroxide is not decomposed at all. Meanwhile, the 10-h half reduction period temperature for the radical polymerizable organic peroxide is 90 to 110 °C, the polymerization temperature should be less than 110°C.

If the 10-h half reduction period temperature of the radical polymerization initiator exceeds 90 °C, the polymerization temperature is increased, so that there is a possiblility that the polymerization temperature is increased and the radical polymerizable organic peroxide is decomposed during the polymerization. If the 10-h half reduction period is less than 40 °C, the polymerization is initiated during the process of impregnating ethylene polymer with with vinyl monomers.

The term "10-h half reduction period temperature", is refers to the temperature, at which the polymerization initiator is decomposed by 50 % when 10 h have passed at a certain temperature after the addition of 0.1 mol of the polymerization initiator to 1 I of benzene.

Specific examples of such a radical polymerization initiator are di-isopropylperoxy dicarbonate (40.5 °C), di-n-propylperoxy dicarbonate (40.5 °C), dimyristylperoxy dicarbonate (40.9 °C), di-(2-ethoxyethyl) peroxy dicarbonate (43.4 °C), di(methoxyisopropyl) peroxy dicarbonate (43.5 °C), di(2-ethylhexyl) peroxy dicarbonate (43.5 °C), t-hexylperoxyneodecanoate (44.7 °C), di(3-methyl-3-methoxybutyl) peroxy dicarbonate (46.5 °C), t-butylperoxyneodecanoate (46.50 °C), t-hexylperoxyneohexanoate (51.3_{°}C), t-butyl- peroxyneohexanoate (53 _{°} C), 2, 4-dichlorobenzoyl peroxide (53 _{°} C), t-hexylperoxypivalate (53.2 _{°} C) t-butyl- peroxypivalate (55 °C), 3, 5, 5-trimethylhexanoyl peroxide (59.5 °C), octanoyl peroxide (62 °C), lauroyl peroxide (62 °C), cumylperoxy octoate (65.1°C), acetyl peroxide (68 C), t-butylperoxy-2-ethylhexanoate (72.5 °C), m-toluoyl peroxide (73 °C), benzoyl peroxide (74 °C), t-butylperoxy isobutylate (78 °C), 1, 1-bis (t-butylperoxy) -3, 5, 5-triethyl-cyclohexane (90 °C). (Figures in parentheses represent 10-h half reduction period temperature.)

The radical polymerization initiator is used in an amount of 0.01 to 5 parts by weight, preferably 0.1 to 2.5 parts by weight, with respect to 100 parts by weight of the sum of the vinyl monomers and the radical polymerizable organic peroxide.

If the amount used is less than 0.01 parts by weight, a perfect polymerization of the vinyl monomers and the radical polymerizable organic peroxide can not be obtained. If the amount exceeds 5 by % weight, it is possible that crosslinking of the ethylene polymers occurs during the polymerization and that an induced decomposition of the radical polymerizable organic peroxide occurs.

In the preparation of the graft polymerization precursor used in the invention, the polymerization is carried out by the usual water suspension polymerization process with the ethylene polymer and a solution prepared separately agitatedly and dispersing the radical polymerization initiator and the radical polymerizable organic peroxide in the vinyl monomers in water in the presence of a suspension agent used for water suspension polymerization, e.g., a water-soluble polymer such as polyvinyl alcohol, polyvinyl pyrrolidone and methyl cellulose and water-insoluble inorganic compounds such as calcium phosphate and magnesium oxide.

The concentration of the water suspension may be set as desired. Usually, however, the proportion of the reaction components is 5 to 150 parts by weight with respect to 100 parts by weight of water.

The impregnation of the ethylene polymer with the solution noted above is suitably carried out at an as high as possible temperature. However, when the polymerization commences with the decomposition of the radical polymerization initiator at the time of the impregnation, the composition of the graft polymerization precursor that is formed becomes very non-homogeneous. Therefore, the impregnation is usually suitably carried out at a temperature 5 _{°} C or more lower than the 10-h half reduction period temperature of the radical polymerization initiator used.

The sum of the free vinyl monomers, radical polymerizable organic peroxide and radical polymerization initiator after the impregnation should be less than 50 % by weight, preferably less than 20 % by weight, with respect to their initial amounts used. If the sum exceeds 50 % by weight, the grafting capacity of the graft polymerization precursor according to the invention will be extremely reduced. The amount of the free vinyl monomers, radical polymerizable organic peroxide and radical polymerization initiator is calculated by sampling a given quantity of the water suspension, quickly filtering the sampled liquid using a metal filter of about 0.04mm (300 mesh) to separate the ethylene polymer and the liquid phase and measuring the quantities of the vinyl monomer, radical polymerizable organic peroxide and radical polymerization initiator in the liquid phase.

In the preparation of the graft polymerization precursor used in the invention, the polymerization is usually carried out at a temperature of 30 to 110 °C, in order to prevent the decomposition of the radical polymerizable organic peroxide during the polymerization.

If the temperature exceeds 110°C, the amount of decomposition of the radical polymerizable organic peroxide that is decomposed will be increased, which is undersirable. The polymerization period is usually suitably 2 to 20 h.

In the graft polymerization precursor used in the invention, the vinyl peroxide copolymer should contain 0.01 to 0.73 % by weight of active oxygen.

If the content of active oxygen is less than 0.01 % by weight, the grafting capacity of the graft polymerization precursor will be extremely reduced.

If the content exceeds 0.73 % by weight, the gel formation capacity will be increased, which is also undesirable.

The active oxygen content can be calculated by extracting the vinyl polymer from the graft polymerization precursor according to the invention by solvent extraction and obtaining the active oxygen content of the vinyl polymer by the iodometric method.

The graft resin composition according to the invention is obtained through a grafting reaction of either the afore-noted graft polymerization precursor alone or of a mixture of the graft polymerization precursor and a polymer noted below caused by kneading the system in a molten state at a temperature of 100-300 _{°} C.

The polymer noted above, which is used to form a mixture with the graft polymerization precursor in accordance with the invention, is suitably the same as that polymer which is used for the manufacture of the graft polymerization precursor, that is, it is a polymer consisting of either one or both of the ethylene polymer and the vinyl polymer.

For example, when the ethylene polymer in the graft polymerization precursor is a low-density ehtylene polymer, the polymer is suitably of the same monomer composition or density. If the monomer composition or density is different, the kneading will be insufficient, so that the mechanical strength and appearance of the obtained graft resin composition will be deteriorated. Even in the case of other ethylene polymers, the same monomer composition is preferred for the same reason.

The vinyl monomer which can be used to form a mixture with the graft polymerization precursor, is preferably obtained through polymerization of one or more vinyl monomers used for the manufacture of the graft polymerization precursor including aromatic vinyl monomers, e.g., styrene, nucleus-substituted styrene, e.g., methyl styrene, dimethyl styrene, ethyl styrene, isopropylstyrene and chlorostyrene, a-substituted styrene, e.g., a-methyl styrene and a-ethyl styrene, (meth) acrylate ester monomer, e.g., alkyl ester with a (meth) acrylate carbon number of 1 to 7, (meth) acrylonitrile, and vinyl ester monomer, e.g., vinyl acetate and vinyl propionate. Preferably, the vinyl polymer has the same monomer composition as the vinyl polymer in the graft polymerization precursor. If the monomer composition was different, the kneading would be insufficient, and a deterioration of the mechanical strength and of the appearance of the resultant graft resin composition would possibly occur.

The graft resin composition according to the invention, which can be used as mixture, is constituted by 1 to 99 % of the graft polymerization precursor and 99 to 1 % by weight of polymer. If the graft polymerization precursor is present in an amount of less than 1 % by weight, that is, if the polymer exceeds 99 % by weight, the amount of the graft polymerization precursor in the graft resin composition will become insufficient, and a laminar separation is likely to occur.

In the manufacture of the grafted resin composition according to the invention, the grafting reaction is caused by kneading the system in a molten state at 100 to 300 °C. If the temperatures was below 100 °C, the melting would be insufficient, the kneading would be difficult, and the decomposition of the radical polymerizable organic oxide in the graft polymerization precursor would require a long time. If the temperature exceeded 300 °C, a molecular decomposition of the graft polymerization precurser would occur.

According to the invention, the kneading is necessary for maintaining the homogeneity of the graft resin composition and controlling the grain size of the dispersed phase.

Particularly, when the temperature of the grafting reaction at the time of the manufacture of the graft resin composition exceeds 200 _{°}C, an aggregation of the dispersed phase is liable to occur. Such aggregation can be prevented by kneading.

The grafting reaction period at the time of the manufacture of the graft polymerization precursor varies with the temperature, but usually it is within 1 h. The thermal melting and kneading of the grafting reaction is carried out using for instance an extruder, an injection molding machine or a mixer.

According to the invention, the grafted resin composition can be obtained, and the proportions of kneading may be changed. Further, the grafted resin composition obtainable according to the invention has a higher graft polymerization precursor than the prior art products. Therefore, it is possible to obtain a grafted resin composition, which is less subject to the aggregation of vinyl polymers due to secondary processing and which is useful, e.g., as adhesive, coating agent, character improver, microdispersion promoter, polymer alloy formation agent, functionable molder material and agent for imparting solubility to a polymer.

The following examples explain the present invention in more detail.

### [Example 1] ]

2,500 g of pure water were charged into a stainless steel autoclave with a volume of 5 I and 2.5 g of polyvinyl alcohol were dissolved as a suspension agent.

Further, 700 g of low density ethylene polymer with a density of 0.925 g/cm (available under the trade name "Sumikathene G-401 ", by
Sumitomo Chemical Co., Ltd., with a grain size of 3 to 4 mm)
were charged and dispersed by agitation. Separately, 1.5 g of benzoyl peroxide (available under the trade name "Nyper-B" by Nippon Oil & Fats Co., Ltd., with a 10-h
half reduction period temperature of 74 C) as radical polymerization initiator and 6 g of t-butylperoxymethacryloyloxyethyl carbonate as radical polymerizable organic peroxide were dissolved in 300 g of styrene, and the resultant solution was charged into the autoclave, and agitated.

Then, the autoclave was heated to elevate its temperature to 60 to 65 _{°} C, and the system was agitated for 1 h, whereby the low density ethylene polymer was impregnated with the vinyl monomer containing the radical polymerization initiator and radical polymerizable organic peroxide. Subsequently, after confirming that the content of free vinyl monomers, radical polymerizable organic peroxide and radical polymerization initiator was less than 50 % by weight of the initial amount, the temperature was elevated to 80 to 85 _{°} C, and the system was held at this temperature for 7 h to complete the polymerization, followed by washing with water and drying to obtain a graft polymerization precursor.

The active oxygen content in the styrene polymer in this graft polymerization precursor was measured. It was 0.13 % by weight. This graft polymerization precursor was subjected to extraction in a Soxhlet extractor with xylene. Any insoluble part in xylene was not found.

Then, this graft polymerization precursor was subjected to a grafting reaction by kneading it at 180 _{°} C for 10 min using a "Laboplast Mill B-75 Type Mixer" (manufactured by Toyo Seiki Seisakusho Co., Ltd.) rotated at a rate of 50 rpm. The system obtained after this grafting reaction was subjected to an extraction in a Soxhlet extractor with ethyl acetate to extract any styrene polymer remaining without being grafted. Thus, the grafting efficiency of the styrene polymer was calculated to be 89 % by weight. Further, an extraction with xylene was conducted to find that the part insoluble in hot xylene was 17.5 % by weight. Further, this insoluble part in xylene was analyzed by pyrolysis gas chromatography.

The contents of low-density ethylene polymer and styrene polymer were 79.0 and 21.0 % by weight, respectively.

### [Examples 2 to 4]

A grafting reaction was caused in the same manner as in Example 1 except for that the kneading temperature of the graft polymerization precursor was varied as in Table 1 for measuring the grafting efficiency and insoluble part in xylene content of the styrene polymer. The results are shown in Table 1.

### [Example 5]

A grafting reaction was caused in the same manner as in Example 1 except for that a "Banbary Type Mixer" (manufactured by Toyo Seiki Seisakusho Co., Ltd.) was used in lieu of "Laboplast Mill B-75 Type Mixer" as the kneader. The grafting efficiency and insoluble part in xylene of the styrene polymer were 86 and 15.6 % by weight.

### [Example 6]

A grafting reaction was caused in the same manner as in Example 1 except for that a single screw extruder (manufactured by Toyo Seiki Seisakusho Co., Ltd.) was used as the kneader. The grafting efficiency and insoluble part in xylene contents of the styrene polymer were 80 and 20 % by weight.

### [Example 7]

A grafting reaction was caused in the same manner as in Example 1 except for that 500g of a low-density ethylene polymer, 2.5g of benzoyl pentoxide, 10g of t-butylperoxymethacryloyloxyethyl carbonate and 500g of styrene, thus preparing the graft polymerization precursor. As a result, the grafting efficiency and insoluble part in xylene of the styrene polymer were 82 and 23 % weight, respectively.

### [Example 8]

A graft polymerization precursor was manufactured for a grafting reaction in the same manner as in Example 1 except for that 300g of styrene and 300g of methyl methacrylate were used. The grafting efficiency and insoluble part in xylene content of the methyl methacrylate polymer were 64 and 22 % by weight, respectively.

### [Example 9]

A graft polymerization precursor was fmanufactured for a grafting reaction in the same manner as in Example 1 except for that a monomer mixture consisting of 10 g of styrene and 90 g of acrylonitrile was used in lieu of 300 g of styrene. The grafting efficiency and insoluble part in xylene of the styreneacrylonitrile copolymer were 58 and 28 % by weight, respectively.

### [Example 10]

A graft polymerization precursor was manufactured for a grafting reaction in the same manner as in Example 1 except for that a monomer mixture consisting of 210 g of styrene and 90 g of n-butyl-acrylate was used in lieu of 300 g of styrene. The grafting efficiency and insoluble part in xylene content of the styrene-n-butyl-acrylate were 62 and 23 % by weight, respectively.

### [Example 11 ]

A graft polymerization precursor was manufactured for a grafting reaction in the same manner as in Example 1 except for that 300 g of vinyl acetate were used in lieu of 300 g of styrene and 6 g of t-butyl peroxyallylcarbonate were used in lieu of 6 g of t-butylperoxymethacryloylxyethylcarbonate. The grafting efficiency and insoluble part in xylene content of the vinyl acetate polymer were 69 and 29 % by weight respectively.

### [Example 12]

A graft polymerization precursor was manufactured for a grafting reaction in the same manner as in Example 1 except for that a powdery low-density ethylene polymer (available under the trade name "Flothene G-401 ", manufactured by Seitetsu Kagaku Kogyo Co., Ltd. with a density of 0.925 g/cm) was used in lieu of the low-density ethylene polymer. The grafting efficiency and insoluble part in xylene content of the styrene polymer were 85 and 13 % by weight, respectively.

### [Comparative Example 1] ]

The graft polymerization precursor manufactured in the same manner as in Example 1 was subjected to a grafting reaction at 90 _{°} C for 1 h using a "Laboplastmill B-75 Type Mixer" at a rotating rate of 50 rpm. The system was not dissolved, so that it could not be kneaded.

The grafting efficiency of the styrene polymer was measured in the same manner as in Example 1.

It was 8 % by weight, and the reaction was insufficient.

### [Comparative Example 2]

A grafting polymerization precursor was manufactured for a grafting reaction in the same manner as in Example 1 except for that t-butylperoxymethacryloyloxyethyl carbonate was not used. The grafting efficiency and insoluble part in xylene contents of the styrene polymer were 7 and 3 % by weight, respectively.

The effect of t-butylperoxymethacryloyloxyethyl carbonate on grafting was clearly recognized.

### [Example 13]

A graft resin composition was obtained by causing a grafting reaction in the same manner as in Example 1 except for that a mixture prepared by adding 50 g of powdery low-density ethylene polymer with a density of 0.925/cm to 50 g of a powdery graft polymerization precursor prepared in the manner as in Example 1 was used, and satisfactorily kneading the mixture at room temperature.

The grafting efficiency of the styrene polymer was obtained with respect to this graft resin composition in the same manner as in Example 1.

It was 72 % by weight.

The insoluble part in xylene content was 9.2 % by weight.

Then, the graft resin composition was subjected to compression molding at 200 _{°} C to obtain a plate having a thickness of 2 mm.

The plate was uniformly white in color, and no phase separation was obserred.

By cutting the plate, no layer separation was observed.

### [Example 14 to 17]

Graft resin compositions were manufactured in the same manner as in Example 13 except for that the proportions of the graft polymerization precursor and low-density ethylene polymer were varied as in Table 2.

The grafting efficiency and insoluble part in xylene content of the styrene polymer in the graft resin compositions and the appearance of plates compression molded at 200 _{°} C are as shown in Table 2.

### [Example 18 to 20]

Graft resin compositions were manufactured in the same manner as in Example 13 except for that the kneading temperature was varied as in Table 3.

The grafting efficiency and insoluble part in xylene content of the styrene polymer in the graft resin compositions and the appearance of plates, compression-molded at 200 _{°} C, are as shown in Table 3.

### [Example 21 ]

A graft polymerization precursor was manufactured in the same manner as in Example 13 except for that a "Banbury Type Mixer" as in Example 5 was used as kneader in lieu of the "Laboplast Mill B-75 Type Mixer".

The grafting efficiency and insoluble part in xylene content of the styrene polymer in the graft resin composition were 78 and 9.2 % by weight, respectively. A plate of the graft resin composition was formed by compression molding at 200 °C, and it neither showed a phase separation nor a layer separation.

### [Example 22]

A graft resin composition was manufactured in the same manner as in Example 13 except for that a single screw extruder was used as the kneader as in Example 6.

The grafting efficiency and insoluble part in xylene content were 68 and 13.1 % by weight, respectively. A plate of this graft resin composition obtained by compression molding at 200 _{°} C neither showed a phase separation nor a layer separation.

### [Example 23]

A graft resin composition was manufactured in the same manner as in Example 13 except for that 50 g of styrene polymer (available under the trade name "Mitsubishi Monsant Chemical Co., Ltd.) were used as vinyl polymer in lieu of 50 g of low-density ethylene polymer as mixture.

In this graft resin composition, the styrene polymer seems to be a matrix. Therefore, it is thought to be more suitable to obtain the grafting efficiency of the low-density ethylene polymer. Unfortunately, however, there is no suitable measuring method. Therefore, the grafting efficiency of the styrene polymer with respect to the low-density styrene polymer was obtained in the same manner as in Example 1.

The grafting efficiency and insoluble part in xylene content of the styrene polymer were 20 and 2.8 % by weight. A plate of this graft resin composition obtained in the same manner as in Example 13 showed neither a phase separation nor a layer separation.

### [Example 24 to 27]

Graft resin compositions were manufactured in the same manner as in Example 13 except for that the proportions of the graft polymerization precursor and styrene polymer were varied as in Table 4.

The grafting efficiency and insoluble part in xylene content of the styrene polymer in the graft resin compositions and the appearance of plates of the compositions formed by compression molding at 200 _{°} C are as shown in Table 4.

As shown in Examples 26 and 27, when the styrene polymer was a matrix, the calculated grafting efficiency of the styrene polymer with respect to the low-density ethylene polymer was low, but the low-density ethylene polymer which was in the dispersion phase seemed to be grafted with a considerable high efficiency compared with the styrene polymer.

### [Example 28 to 31 ]

Graft polymerization precursors were manufactured in the same manner as in Example 13 except for that 700 g of a low-density ethylene polymer were used for the manufacture of the graft polymerization precursor in lieu of 500 g, 300 g of styrene were used in lieu of 500 g, 1.5 g of benzoyl peroxide were used in lieu of 2.5 g and 6 g of t-butylperoxymethacryloyloxyethyl carbonate were used in lieu of 1 g.

Then, graft resin compositions were manufactured in the same manner as in Example 13 except for that the amount the graft polymerization precursor, low-density ethylene polymer and styrene polymer were varied as in Table 5.

### [Example 32 to 36]

A graft polymerization precursor was manufactured in the same manner as in Example 13 except for that 300 g of methyl mechacrylate were used in lieu of 300 g of styrene and 0.6 g of n-dodecylmercaptan were additionally used.

Then, graft resin compositions were manufactured in the same manner as in Example 13 except for that the amounts of the graft polymerization precursor, low density ethylene polymer and methyl methacrylate polymer (available under the trade name "Delpet 50N" manufactured by Asahi Chemical Co., Ltd.) were varied as shown in Table 6. Table 6 shows the test results.

### [Example 37 to 41 ]

A graft polymerization precursor was manufactured in the same manner as in Example 13 except for that a monomer mixture consisting of 210 g of styrene, 90 g of acrylonitrile and 0.6 g of n-dodecylmercaptan, as molecular weight adjuster, was used in lieu of 300 g of styrene.

Separately, an acrylonitrile-styrene copolymer was obtained by adding a mixture solution consisting of 70 g of styrene, 30 g of acrylonitrile, 0.2 g of n-dodecylmercaptan and 0.5 g of benzoylperoxide to 500 g of an aqueous solution containing 1 % of polyvinyl alcohol and holding the resultant admixture at 80 to 85 _{°} C for 7 h to complete polymerization.

Then, graft resin compositions were manufactured in the same manner as in Example 13 except for that the amounts of the acrylonitrile-styrene copolymer, graft polymerization precursor and low-density ethylene polymer were varied as shown in Table 7.

Test results are as shown in Table 7.

### [Example 42]

A graft polymerization precursor was manufactured in the same manner as in Example 13 except for that a monomer mixture consisting of 210 g of methyl methacrylate and 90 g of n-butyl-acrylate was used in lieu of 300 g of styrene.

Then, a graft resin composition was manufactured in the same manner as in Example 13 except for that 50 g of the graft polymerization precursor and 50 g of low-density ehtylene polymer were used.

Thus, the grafting efficiency and insoluble part in xylene content of the methyl methacrylate-n-butyl-acrylate copolymer were 62 and 8.9 % by weight, respectively.

Further, a plate formed by compression molding in the same manner as in Example 13 had a phase separation and layer separation.

### [Example 43]

A graft polymerization precursor was manufactured in the same manner as in Example 13 except for that 300 g of vinyl acetate were used in lieu of 300 g of styrene, and 6 g of t-butylperoxyallyl carbonate were used in lieu of 6 g of t-butylperoxymethacryloyloxyethyl carbonate.

Then, a graft resin composition was manufactured in the same manner as in Example 13 except for that 50 g of this graft polymerization precursor and 50 g of low-density ethylene polymer were used.

The grafting efficiency was measured in the same manner as in Example 13 except for that methanol was used as extraction solvent in lieu of ethyl acetate. The grafting efficiency and insoluble part in xylene content of the vinyl acetate polymer were 73 and 16.3 % by weight, respectively.

A graft polymerization precursor was manufactured in the same manner as in Example 13 except for that 50 g of the graft polymerization precursor and 50 g of low-density ethylene polymer were used.

Further, the grafting efficiency was measured by using methanol as extraction solvent in lieu of ethyl acetate in Example 13.

The grafting efficiency and insoluble part in xylene content of the vinyl acetate polymer were 73 and 6.3 % by weight, respectively.

Further, a plate formed by compression molding in the manner as in Example 13 had neither a phase separation nor a layer separation.

### [Example 44]

A graft polymerization precursor was manufactured in the same manner as in Example 13. Then, a graft resin composition was manufactured in the same manner as in Example 13 except for that 50 g of "Sumikathene G-401 " (a trade name by Sumitomo Chemical Co., Ltd. with a density of 0.010 g/cm) were mixed with a low-density ethylene polymer kneaded as graft polymerization precursor and then mixed with 50 g of the graft polymerization precursor.

At this time, the grafting efficiency and insoluble part in xylene content in the styrene polymer were 74 and 9.8 % weight, respectively. A plate formed by compression molding in the same manner as in Example 13 had no phase separation, but a slight layer separation was seen on the broken surface.

### [Comparative Example 3]

Then, a graft resin composition was manufactured in the same manner as in Example 13 except for that 0.5 g of the graft polymerization precursor, 50 g of low-density ethylene polymer and 49.5 g of "Dialex HF-55" used in Example 23 were mixed together.

The grafting efficiency of the styrene polymer was 0.3 % by weight, and the insoluble part in xylene content was 0.1 % weight.

A plate formed by compression molding in the same manner as in Example 13 had no phase separation, and also its broken surface had a large layer separation.

### [Comparative Example 4]

A grafting reaction was caused in the same manner as in Example 13 except for that the temperature of kneading of the graft polymerization precursor and the polymer was set to 90 _{°} C.

However, kneading in the molten state was impossible due to the low kneading temperature.

### [Comparative Example 5]

A grafting reaction was caused in the same manner as in Example 13 except for that the temperature of kneading of the graft polymerization precursor and polymer was set to 320 _{°} C.

During the grafting reaction, the resin was decomposed, and the resultant graft resin composition had a brown color.

### [Comparative Example 6]

A grafting reaction was caused in the same manner as in Example 13 except for that the graft polymerization precursor was manufactured without the use of t-butylperoxymethacryloyloxyethyl carbonate.

The grafting efficiency and insoluble part in xylene content of the styrene polymer were 7 and 2.8 % by weight, respectively.

However, a plate formed by compression molding in the same manner as in Example 13 had a slight phase separation, and its broken surface had a great layer separation.

In other words, the effect of t-butylperoxymethacryloyloxyethyl carbonate on the grafting efficiency was clearly confirmed.

### [Examples 45 to 49]

Graft polymerization precursors were obtained in the same manner as in Example 1 except for that the ethylene polymers shown in Table 8 were used in lieu of the low-density ethylene polymer as the ethylene polymer for the graft polymerization precursor, the impregnation was carried out for two hours in lieu of one hour and the polymerization temperature of 80 to 85 °C when manufacturing the graft polymerization precurser was varied as in Table 8.

Each of the graft polymerization precursors was subjected to extraction with ethyl acetate at room temperature for 7 days to obtain a styrene polymer solution, which was charged into a powdery styrene polymer.

The active oxygen content in the styrene polymer was measured in the same manner as in Example 1.

The results are as shown in Table 8.

Further, the insoluble part in xylene content was also measured to obtain the results as shown in Table 8.

Further, a grafting reaction of each graft polymerization precursor was caused in the same manner as in

### Example 1.

The grafting efficiency and insoluble part in xylene content of the styrene polymer of each graft resin composition were measured in the same manner as in Example 1.

The results are shown in Table 8.

The term "grafting efficiency" represents the ratio of grafted polystyrene to the total amount polymerized.

### [Examples 50 to 53]

Graft resin compositions were obtained in the same manner as in Example 1 except for that the graft polymerization precursors obtained in Examples 45 to 48 were used and the kneading temperature was varied as shown Table 9 instead of 180 °C.

The grafting efficiency and insoluble part in xylene content of the styrene polymer of each graft resin composition were measured.

The results are as shown in Table 9.

### [Examples 54 to 57]

Graft resin compositions were obtained by causing grafting reactions in the same manner as in Example 1 except for that the graft polymerization precursors obtained in Examples 45 to 48 were used and the kneaders as shown in Table 10 were used in lieu of "Laboplast Mill B-75 Type Mixer". The grafting efficiency and insoluble part in xylene content of the styrene copolymer of each graft resin composition were measured.

The results are as shown in Table 10.

### [Example 58 to 61 ]

Graft polymerization precursors were manufactured in the same manner as in Example 1 except for that the kind and proportion of ethylene (co-and/or) polymer used for the preparation of the graft polymerization precursor and the proportion of benzoyl peroxide, t-butylperoxymethacryloyloxyethyl carbonate and styrene were varied as in Table 11.

Graft resin compositions were obtained using these graft polymerization precursors in the same manner as in Example 1.

The grafting efficiency and insoluble part in xylene content of the styrene polymer of each of the graft resin composition were measured in the same manner as in Example 1.

The results are as shown in Table 11.

### [Examples 62 to 73]

Graft polymerization precursors were obtained in the same manner as in Table 12 except for that the proportions of the ethylene polymer and styrene used in the manufacture of the graft polymerization precursors were varied as shown in Table 12.

Graft resin compositions were obtained using the individual graft polymerization precursors in the same manner as in Example 1.

The grafting efficiency and insoluble part in xylene content of the styrene polymer of each of the graft resin compositions were obtained in the same manner as in Example 1.

The results are as shown in Table 12.

### [Examples 74 to 77]

Graft polymerization precursors were manufactured in the same manner as in Example 1 except for that the proportions of the ethylene polymer, styrene and t-butylperoxymethacryloyloxyethyl carbonate used for the preparation of the graft polymerization precursors were varied as in Table 13.

Using these graft polymerization precursors graft resin compositions were obtained in the same manner as in Example 1.

With respect to each of these graft resin compositions, the grafting efficiency and insoluble part in xylene content of the vinyl acetate copolymer were measured in the same manner as in Example 1.

The results are as shown in Table 13.

### [Examples 78 to 80]

Graft polymerization precursors were obtained by causing grafting reactions in the same manner as in Example 1 except for that the product obtained by pulverizing the epoxy-group-containing ethylene copolymer (Example 78), the ethylene-ethyl acrylate copolymer (Example 79) or the ethylene-vinyl acetate copolymer (Example 80) in the frozen state was used as ethylene (co-and/or) polymer in lieu of low-density ethylene polymer for the preparation of the graft polymerization precursors.

The grafting efficiency and insoluble part in xylene content of the styrene polymer were as shown in Table 14.

### [Example 81 ]

A graft polymerization precursor was manufactured by a grafting reaction in the same manner as in Example 45 except for that a system consisting of 82 % by weight of ethylene, 12 % by weight of glycidyl methacrylate and 6 % by weight of vinyl acetate was used in lieu of the epoxy-group-containing copolymer.

The grafting efficiency and insoluble part in xylene content of the styrene polymer were 79.5 and 19.8 % by weight.

### [Example 82]

A graft polymerization precursor was manufactured by a grafting reaction in the same manner as in Example 46 except for that a copolymer consisting of 95 % by weight of ethylene and 5 % by weight of ethyl acrylate (available under the trade name "Nisseki Lekusuron EEA A-3050" manufactured by Nippon Oil Co., Ltd.) was used in lieu of the ethylene-ethyl acrylate copolymer.

The grafting efficiency and insoluble part in xylene content of the styrene polymer were 76.7 and 18.8 % by weight, respectively.

### [Example 83]

A graft polymerization precursor was manufactured by a grafting reaction in the same manner as in Example 47 except for that a copolymer consisting of 72 % by weight of ethylene and 28 % by weight of vinyl acetate (available under the trade name"Evaflex 260" manufactured by Mitsui Polychemical Co., Ltd.) was used in lieu of the ethylene-vinyl acetate copolymer.

The grafting efficiency and insoluble part in xylene content of the styrene copolymer were 84.8 and 27.4 % by weight, respectively.

### [Comparative Examples 7 to 10]

The graft polymerization precursors used in Examples 45 to 49 were subjected to grafting reactions at 90 _{°} C for one hour using a "Laboplast Mill B-75 Type Mixer" at a rotational speed of 50 RPM. The system was not molten, so that it could not be kneaded.

The grafting efficiency of the styrene polymer was measured in the same manner as in Example 1.

It was 6.2 % by weight in Comparative Example 7, 3.1 % by weight in Comparative Example 8, 4.7 % by weight in Comparative Example 9 and 2.7 % by weight in Comparative Example 10, i.e. it was insufficient.

### [Comparative Examples 11 to 14]

Grafting reactions were caused in the same manner as in respective Comparative Examples 7 to 10 except for that the temperature of the grafting reaction was varied from 90 _{°} C to 320 _{°} C. As a result, a decomposition of the graft polymerization precursors occurred, and the resins were colored.

### [Comparative Examples 15 to 18]

Grafting reactions were caused in the same manner as in Examples 45 to 48 except for that t-butylperoxymethacryloyloxyethyl carbonate was not used. When the the epoxy-group-containing ethylene copolymer (Comparative Example 15) was used, the grafting efficiency and insoluble part in xylene content of the styrene polymer were 3.2 and 0 % by weight, respectively. When the ethylene-ethyl acrylate copolymer (Comparative Example 16) was used, they were 1.2 and 0 % by weight, respectively.

When the ethylene-vinyl acetate copolymer (Comparative Example 17) was used, they were 1.9 and 0 % by weight, respectively. When the ethylene-propylene -diene copolymer (Comparative Example 18) was used, they were 0.6 and 0 % by weight, respectively.

Thus, the effect of t-butylperoxymethacryloyloxyethyl carbonate on grafting was clearly confirmed.

### [Examples 84 to 88]

Graft polymerization precursors were obtained by grafting reactions carried out in the same manner as in Example 13 except for that 50 g of ethylene copolymer as shown in Table 15 was added to 50 g of the powdery graft polymerization precursors obtained in Examples 45 to 49.

The grafting efficiency and insoluble part in xylene content of the styrene polymer of these graft polymerization precursors were as shown in Table 15.

Plates with a thickness of 2 mm were manufactured using these graft resin compositions in the same manner as in Example 13.

These plates were all uniformly white in color and had no recognizable phase separation. Further, no layer separation was recognized in any of their broken surfaces.

### [Examples 89 to 92]

Graft resin compositions were manufactured in the same manner as in respective Examples 84 to 87 except for that the mixed amounts of the graft polymerization precursor and ethylene copolymer for the preparation of the graft polymerization precursor were varied as in Table 16 to 19.

The styrene polymer grafting efficiency and insoluble part in xylene content of the resultant graft resin compositions as well as the appearance of plates formed by compression molding at 200 _{°} C were as shown in Tables 16 to 19.

### [Examples 93 to 96]

Graft resin compositions were manufactured in the same manner as in respective Examples 84 to 87 except for that the kneading temperature was set as in Table 20 instead of 180 °C.

The styrene polymer grafting efficiency and insoluble part in xylene content of the graft resin composition and the appearance of plates formed by compression molding at 200 _{°} C are as shown in Table 20.

### [Examples 97 to 100]

Graft polymerization precursors were manufactured in the same manner as in respective Examples 84 to 87 except for that a "Laboplast Mill B-75 Type Mixer" was replaced by the kneaders as shown in Table 21.

The characteristics of the graft resin compositions and the appearance of the plates formed by compression molding are as shown in Table 21.

### [Examples 101 to 104]

Graft resin compositions were manufactured in the same manner as in Examples 84 to 87 except for that styrene (available under the trade name "Dialex HF-55", manufactured by Mitsubishi Monsanto Chemical Co., Ltd.) was used as vinyl polymer in lieu of the ethylene copolymer to be mixed with the graft polymerization precursor.

The characteristics of the graft resin composition and the appearance of plates formed by compression molding are as shown in Table 22.

### [Examples 105 to 108]

Graft resin compositions were manufactured in the same manner as in respective Examples 101 to 104 except for that the mixed amounts of the graft polymerization precursor and styrene polymer were varied as in Tables 23 to 26.

The styrene polymer grafting efficiency and insoluble part in xylene content of the graft resin composition and the appearance of plates formed by compression molding at 200 _{°} C are as shown in Tables 23 to 26.

### [Examples 109 to 112]

Graft polymerization precursors were manufactured in the same manner as in Examples 84 to 87 except for that 500 g of an ethylene copolymer were used instead of 700 g, 500 g of styrene were used instead of 300 g, 2.5 g of benzoyl peroxide were used instead of 1.5 g and 9 g of t-butylperoxymethacryloyloxyethyl carbonate were used instead of 6 g for the preparation of the graft polymerization precursors.

Then, graft resin compositions were prepared in the same manner as in Examples 84 to 87 except for that the proportions of the graft polymerization precursor, ethylene copolymer and styrene were varied as in Tables 27 to 30.

The styrene polymer grafting efficiency and insoluble part in xylene content of these graft resin compositions and the appearance of plates formed by compression molding at 200 _{°} C are as shown in Table 27 to 30.

### [Examples 113 to 116]

Graft polymerization precursors were prepared in the same manner as in respective Examples 84 to 87 except for that methyl methacrylate was used in lieu of styrene for the preparation of the graft polymerization precursors and 0.6 g of n-dodecyl mercaptan were additionally used as molecular weight adjusting agent.

Graft polymerization precursors were manufactured in the same manner as in Examples 84 to 87 except for that the amounts of the graft polymerization precursor, ethylene copolymer and methyl methacrylate polymer (available under the trade name "Delpet 50N" manufactured by Asahi Kasei Chemical Industry Co., Ltd.) were varied as in Tables 31 to 34. The results are as shown in Tables 31 to 34.

### [Examples 117 to 120]

Graft polymerization precursors were manufactured in the same manner as in Examples 84 to 87 except for that a monomer mixture consisting of 210 g of styrene and 90 g of acrylonitrile was used in lieu of 300 g of styrene and 0.6 g of n-dodecyl mercaptan as molecular weight adjusting agent. Separately, an acrylonitrile-styrene copolymer was prepared by adding 70 g of styrene, 30 g of acrylonitrile, 0.2 g of n-dodecyl mercaptan and 0.5 g of benzoyl peroxide to 500 g of a water solution containing 1 % polyvinyl alcohol and holding the resultant admixture at a temperature of 80 to 85 _{°} C for 7 h to complete the polymerization. Graft resin compositions were manufactured in the same manner as in Examples 84 to 87 except for that the amounts of this copolymer and the graft polymerization precursor and ethylene copolymer noted above were varied as in Tables 35 to 38. The results are as shown in Tables 35 to 38.

### [Examples 121 to 124]

Graft polymerization precursors were manufactured in the same manner as in Examples 84 to 87 except for that a monomer mixture consisting of 210 g of ethyl methacrylate and 90 g of n-butyl-acrylate was used in lieu of 300 g of styrene. Then, graft resin compositions were manufactured in the same manner as in Examples 84 to 87 except for that 50 g of the graft polymerization precursor and 50 g of the ethylene copolymer as shown in the Table below were used. The results are as shown in Table 39.

### [Examples 125 to 128]

Graft polymerization precursors were manufactured in the same manner as in Examples 84 to 87 except for that 300 g of vinyl acetate were used in lieu of 300 g of styrene and 6 g of t-butylperoxymethacryloyloxyethyl carbonate were used in lieu of 6 g of t-butylperoxyethyl carbonate. Then, graft resin compositions were manufactured in the same manner as in respective Examples 84 to 87 except for that 50 g of the graft polymerization precursor and 50 g of the same ethylene copolymer were used for the graft polymerization precursor.

Further, the grafting efficiency was measured by using methanol as extraction solvent in lieu of ethyl acetate.

The results are as shown in Table 40.

### [Example 129]

A graft polymerization precursor was manufactured in the same manner as in Example 84. Then, a graft resin composition was manufactured in the same manner as in Example 84 except for that 50 g of a copolymer consisting of 82 % by weight of ethylene, 12 % by weight of glycidyl methacrylate and 6 % by weight of vinyl acetate was mixed as epoxy-group-containing ethylene copolymer and kneaded with 50 g of the graft polymerization precursor.

In this case, the styrene polymer grafting efficiency and insoluble part in xylene content were 55.5 and 14.5 % by weight, respectively. A plate compression-molded in the same manner as in Example 84 had no phase separation, but its broken surface had a trace of layer separation.

### [Example 130]

A graft resin composition was manufactured in the same manner as in Example 85 except for that a copolymer consisting of 95 % by weight of ethylene and 5 % by weight of ethyl acrylate (available under the trade name "Nisseki Leksron EEA A-3050" manufactured by Nippon Petrochemicals Co., Ltd.) was used in lieu of the ethylene-ethyl acrylate copolymer. The grafting efficiency and insoluble part in xylene content were 9.5 and 9.7 % by weight, respectively.

### [Example 131] ]

A graft resin composition was manufactured in the same manner as in Example 86 except for that a copolymer consisting of 72 % by weight of ethylene and 28 % by weight of vinyl acetate was used in lieu of the ethylene-vinyl acetate copolymer. The grafting efficiency and insoluble part in xylene content were 53.5 and 10.5 % by weight, respectively.

### [Comparative Examples 19 to 22]

Graft polymerization precursors were manufactured in the same manner as in respective Examples 84 to 87. Then, graft resin compositions were manufactured in the same manner as in Examples 84 to 87 by mixing 0.5 g of the graft polymerization precursor, 50 g of the same copolymer used for that preparation of each of the graft polymerization precursors and 49.5 g of the same styrene polymer used in Example 10. The grafting efficiency of the styrene polymer was 0.3, 0.4, 0.9 and 0.7 % by weight, respectively. The insoluble part in xylene content was 0.1, 0.4, 0.3 and 0.2 % by weight, respectively. Further, plates formed by compression molding had a phase separation, and also their broken surface had great layer separation.

### [Comparative Examples 23 to 26]

Grafting reactions were caused in the same manner as in Examples 84 to 87 except for that the temperature of the kneading of the graft polymerization precursor and ethylene copolymer was set to 90 _{°} C. However, kneading in the molten state was impossible because of the low kneeding temperature.

### [Comparative Examples 27 to 30]

Grafting reactions were caused in the same manner as in Examples 84 to 87 except for that the temperature of the kneading of the graft polymerization precursor and ethylene copolymer was set to 320 _{°}C. As a result, each resin was decomposed during the grafting reaction, and the obtained resin composition was brown in color.

### [Comparative Examples 31 to 34]

Grafting reactions were caused in the same manner as in Examples 84 to 87 except for that the respective graft polymerization precursors were manufactured without the use of t-butylperoxymethacryloyloxyethyl carbonate . As a result, the grafting efficiency of the styrene polymer was 0.1, 0.2, 0 and 0 % by weight, respectively, and the insoluble part in xylene content was 0 % by weight in all cases. Further, plates formed by compression molding had a phase separation, and their broken surface had a great layer separation. This fact confirms the effect of t-butylperoxymethacryloyloxyethyl carbonate on grafting.

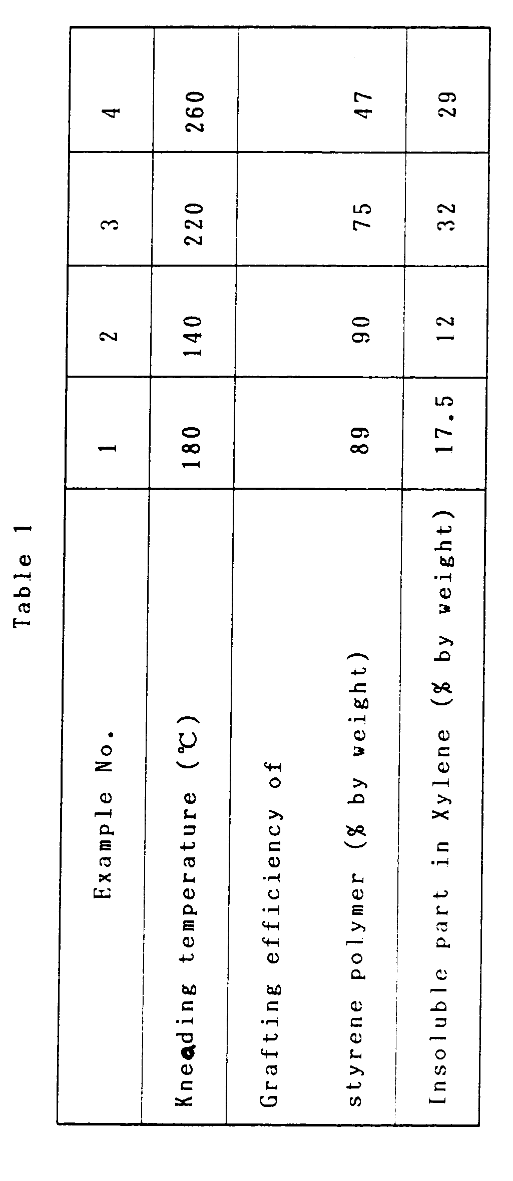

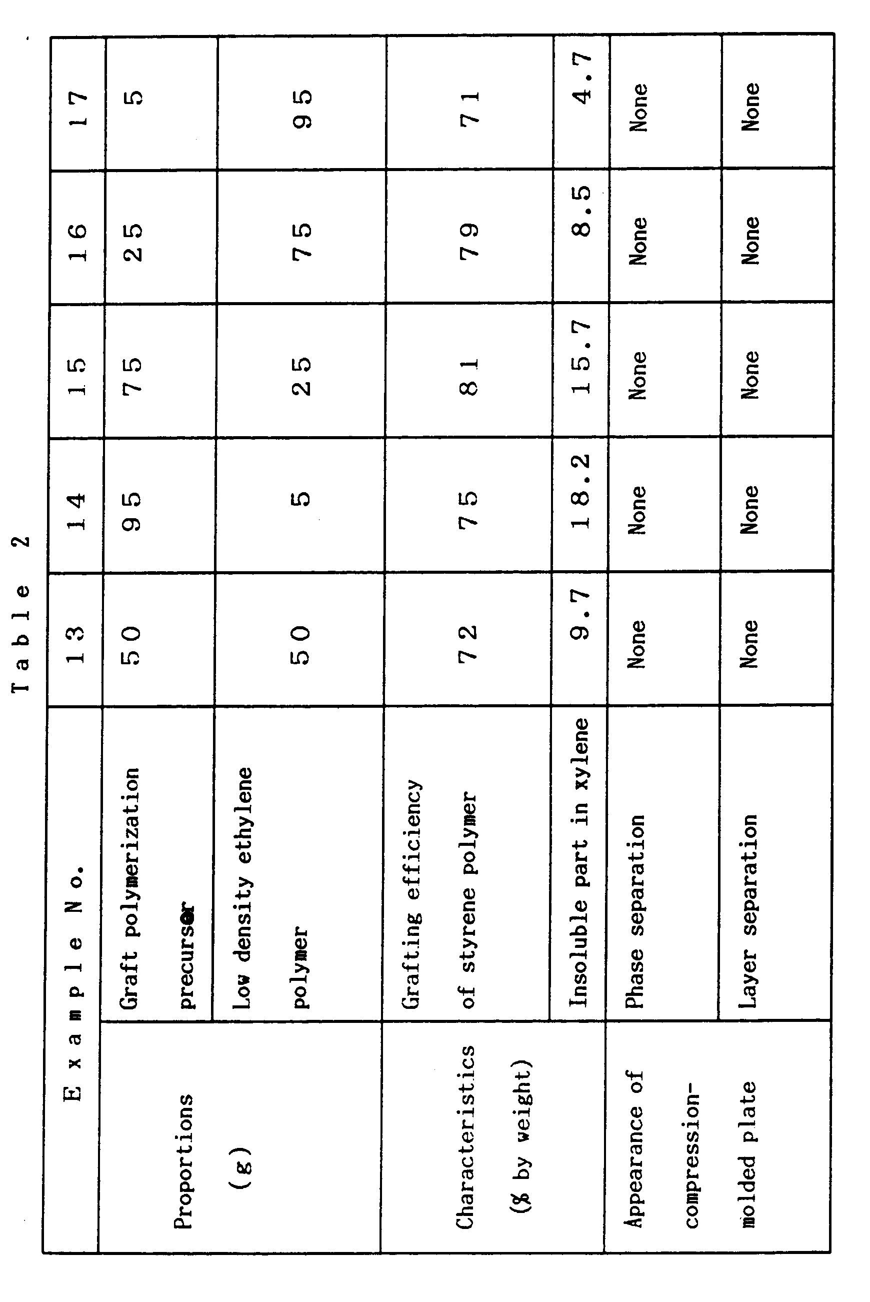

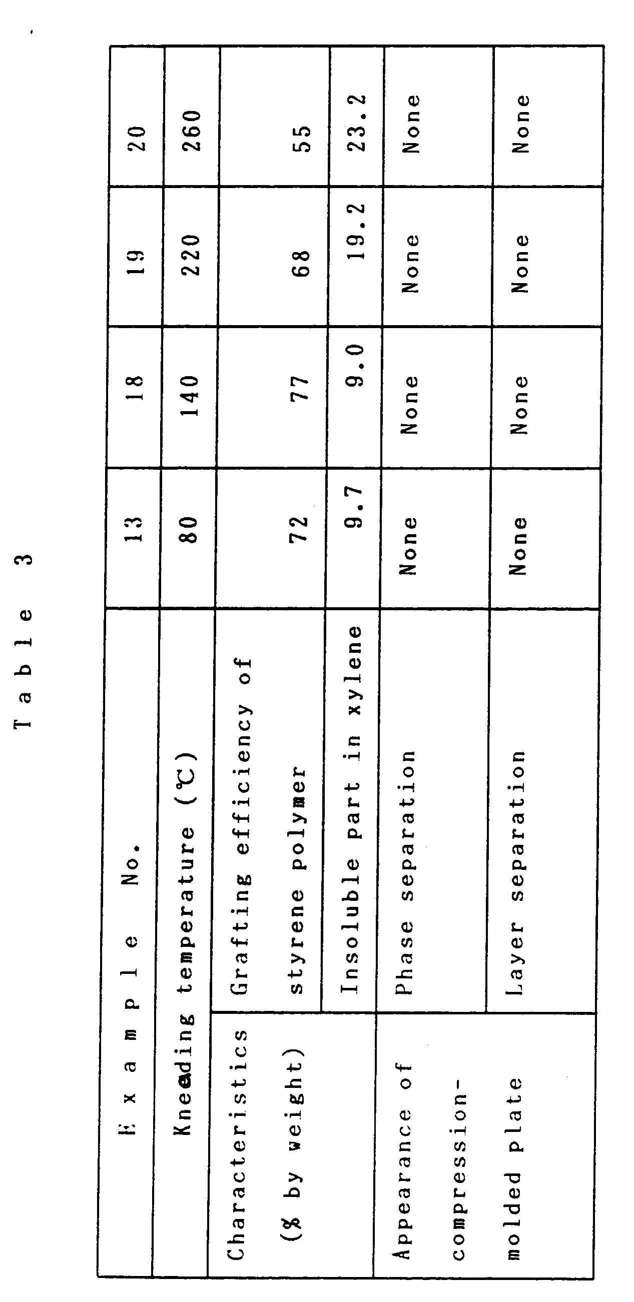

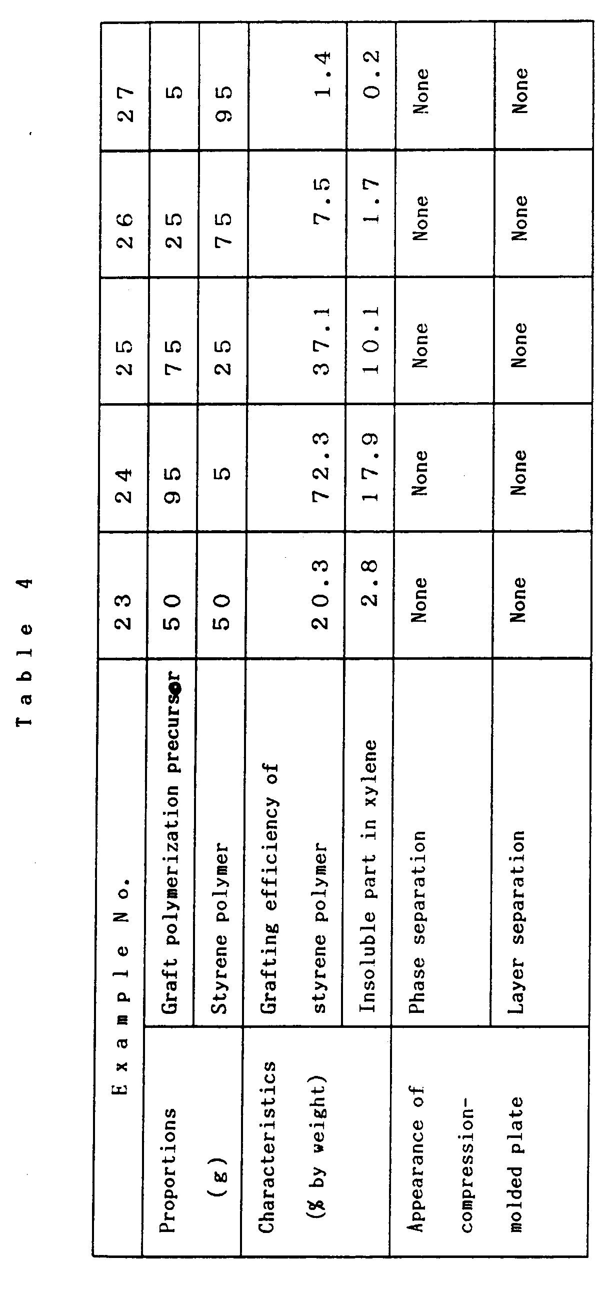

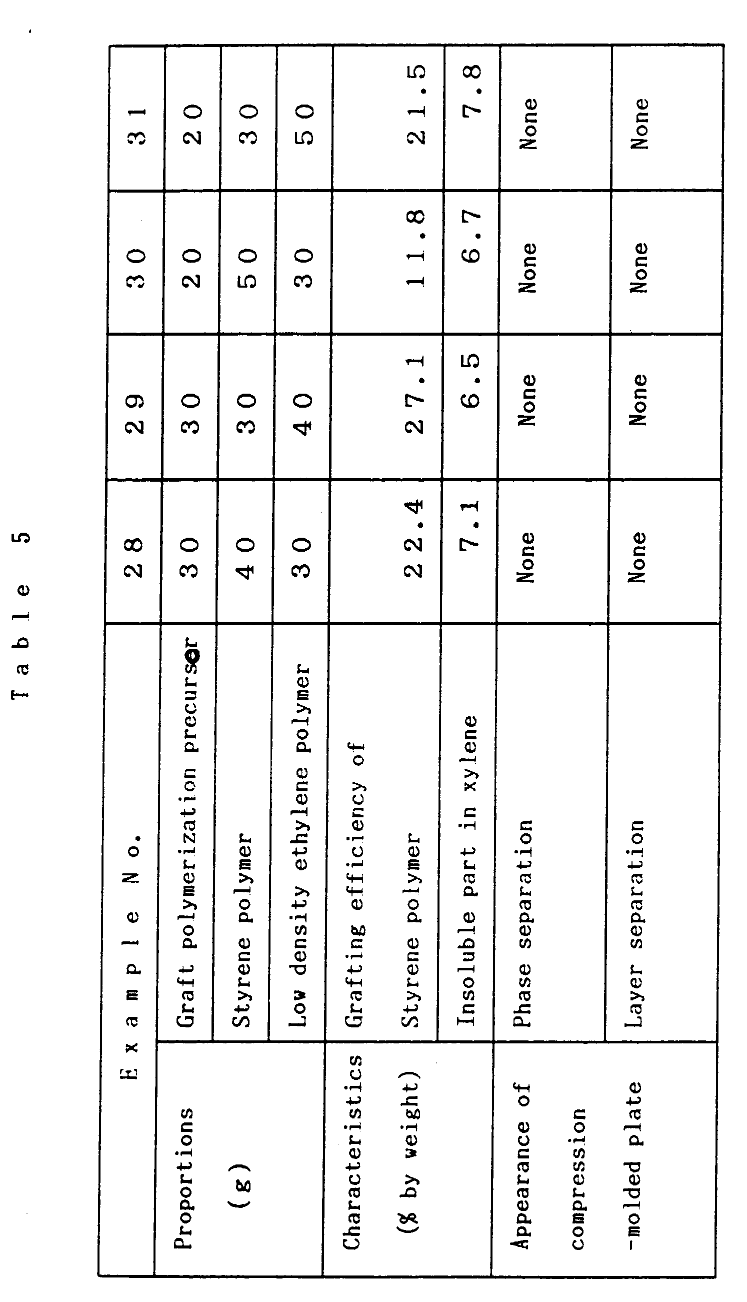

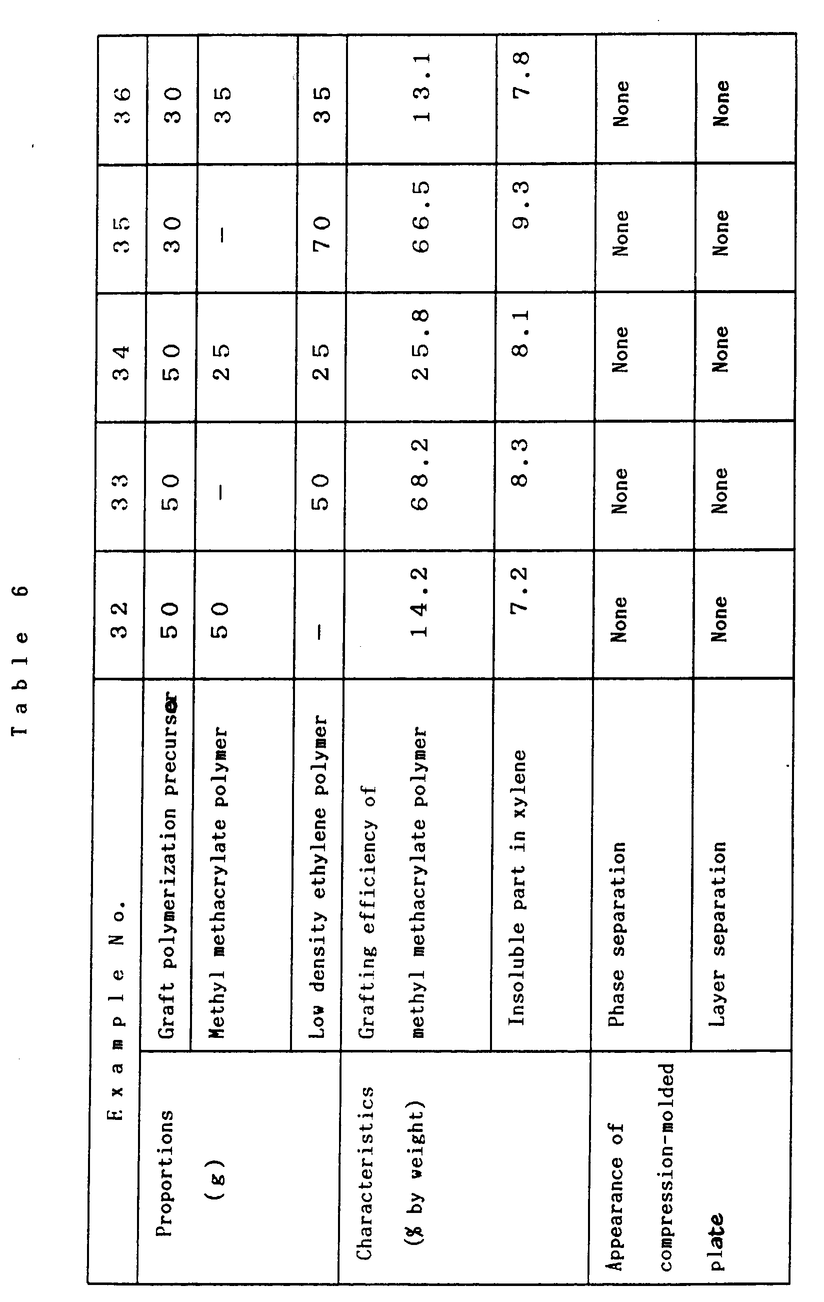

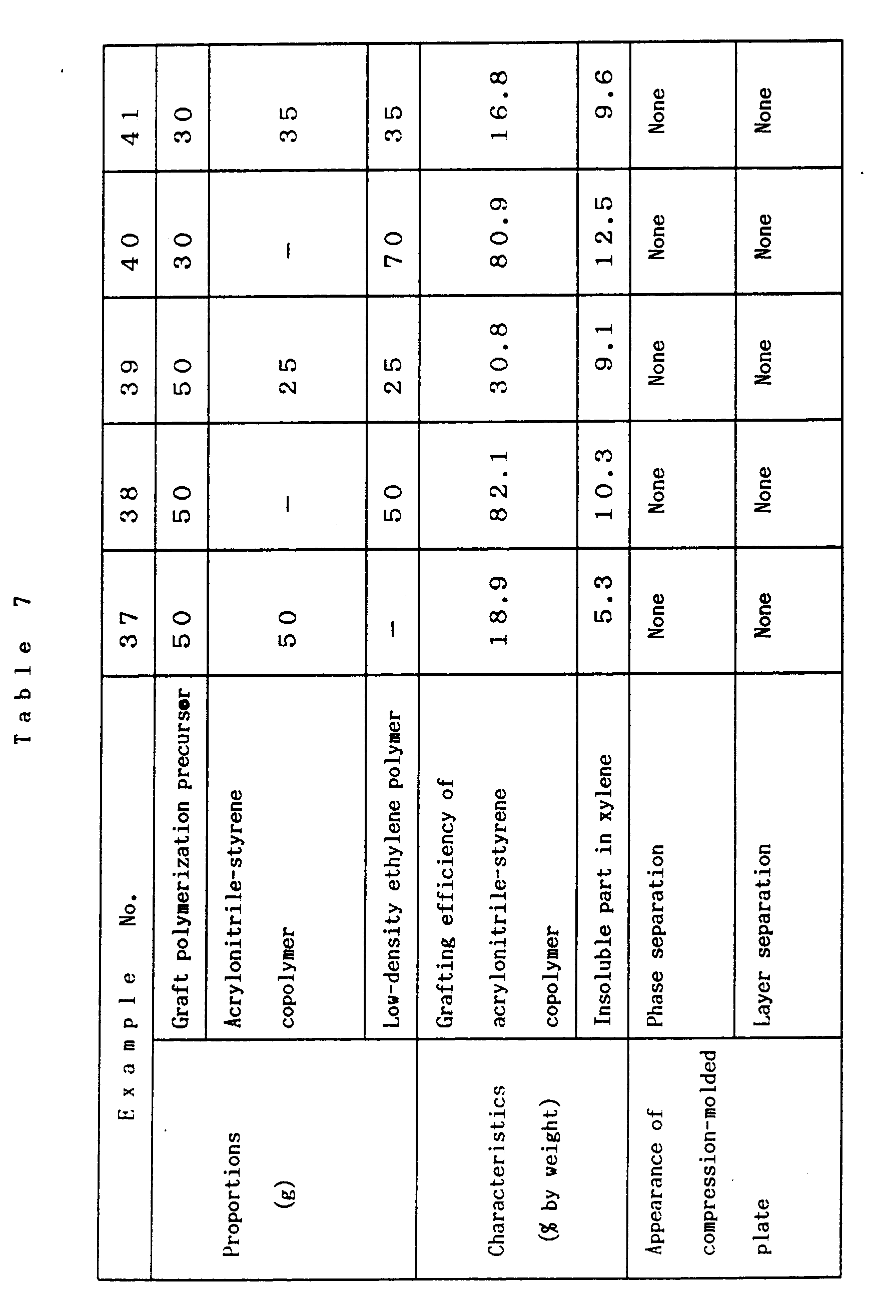

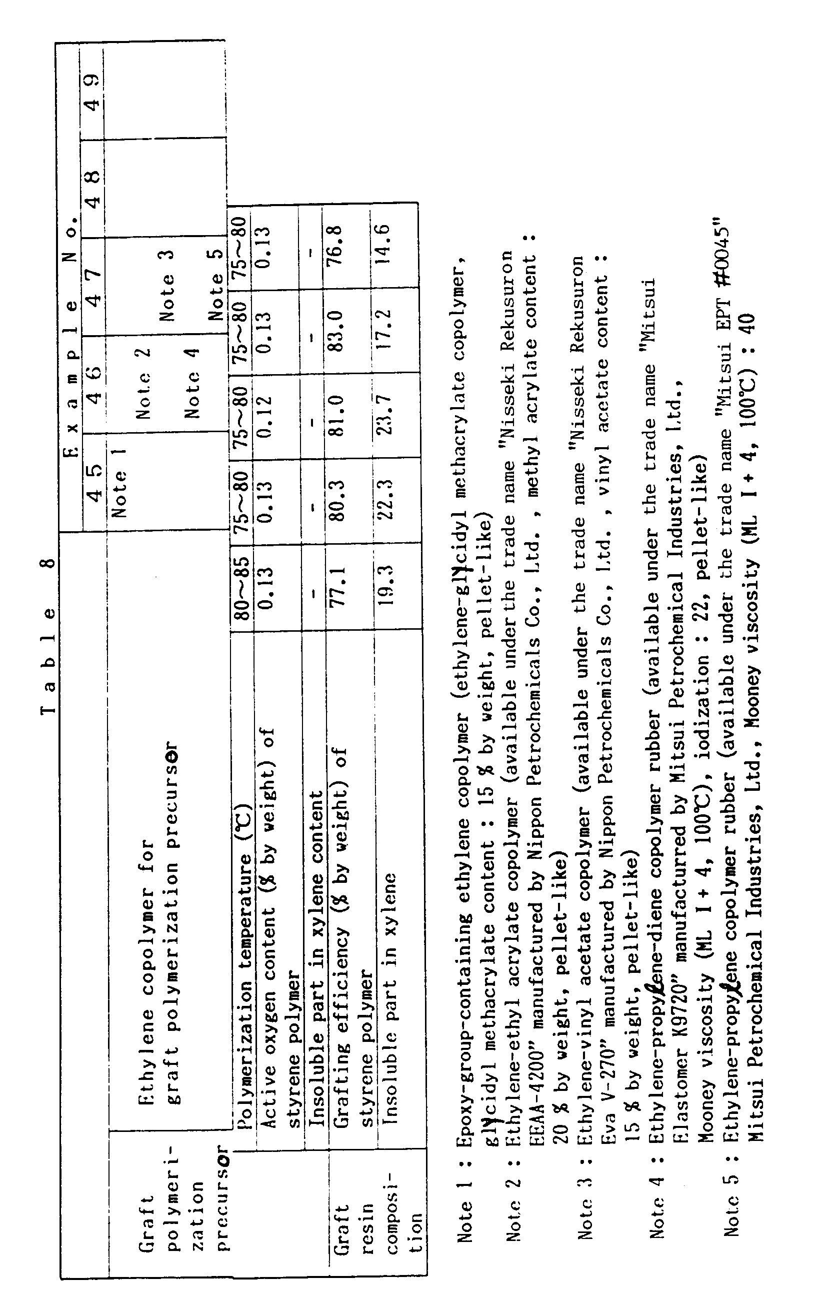

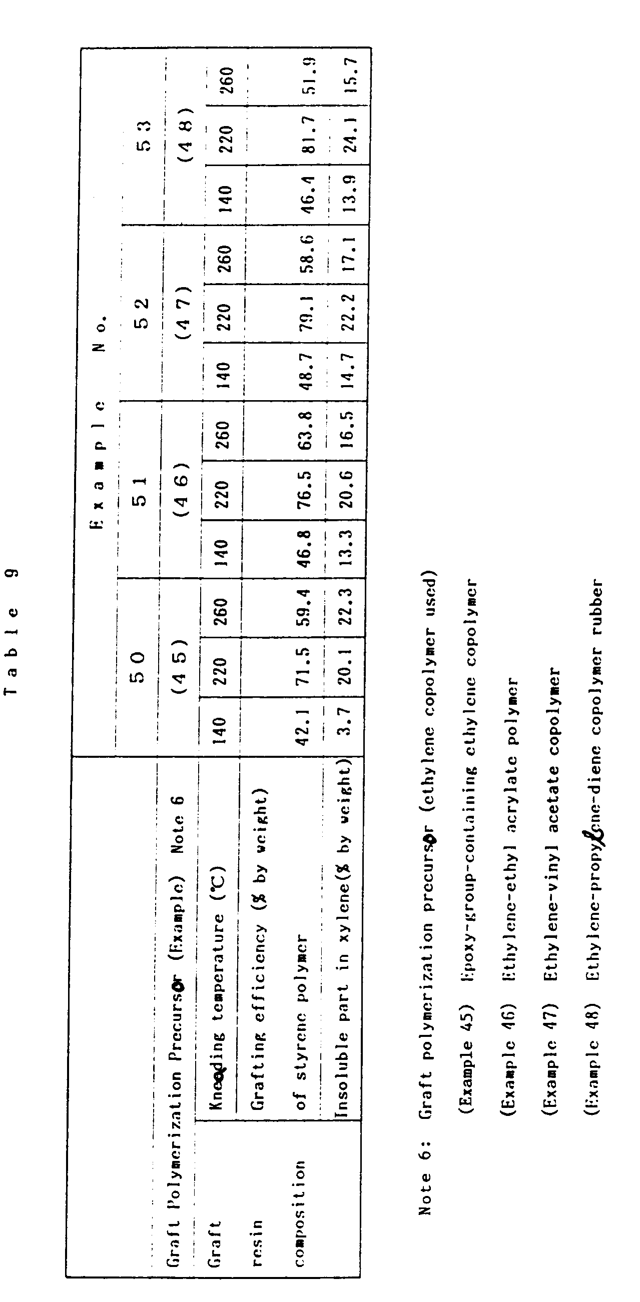

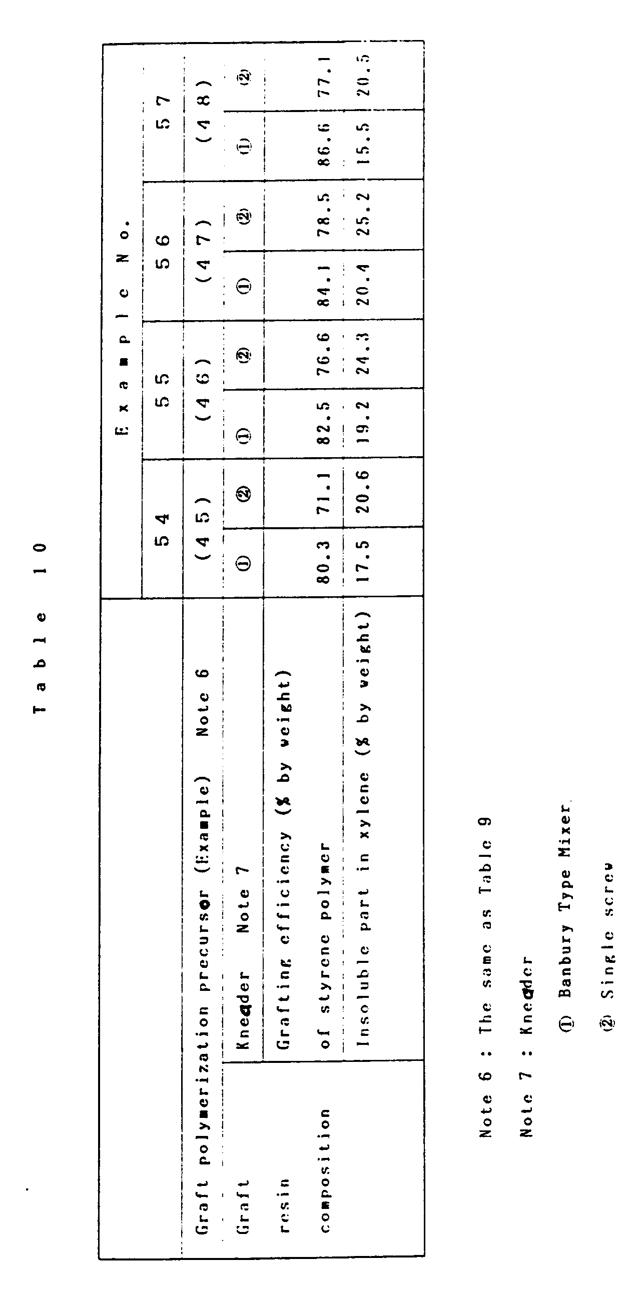

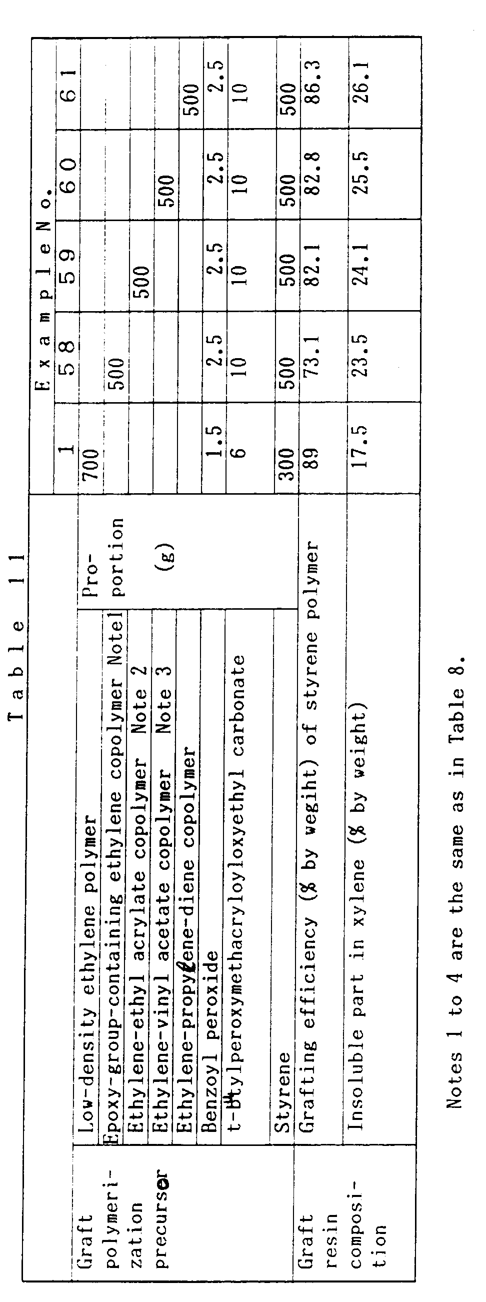

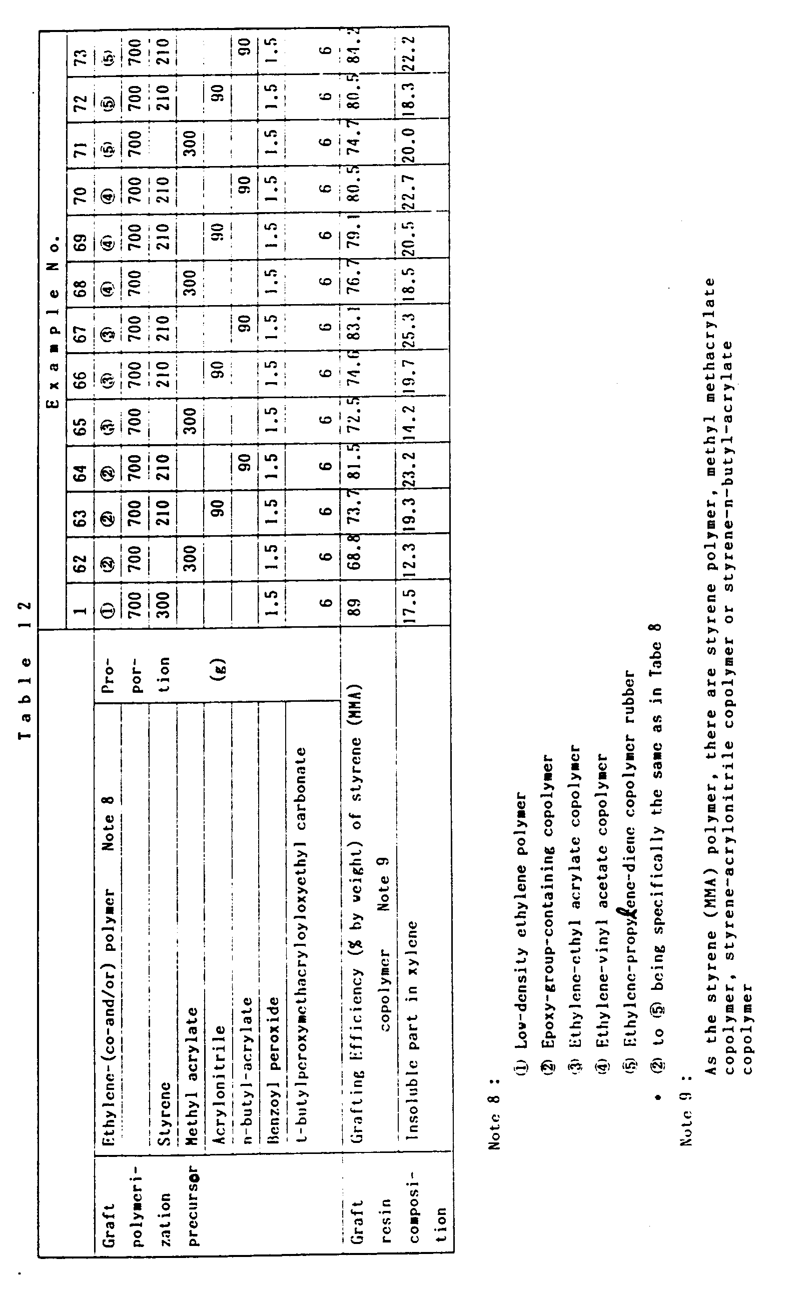

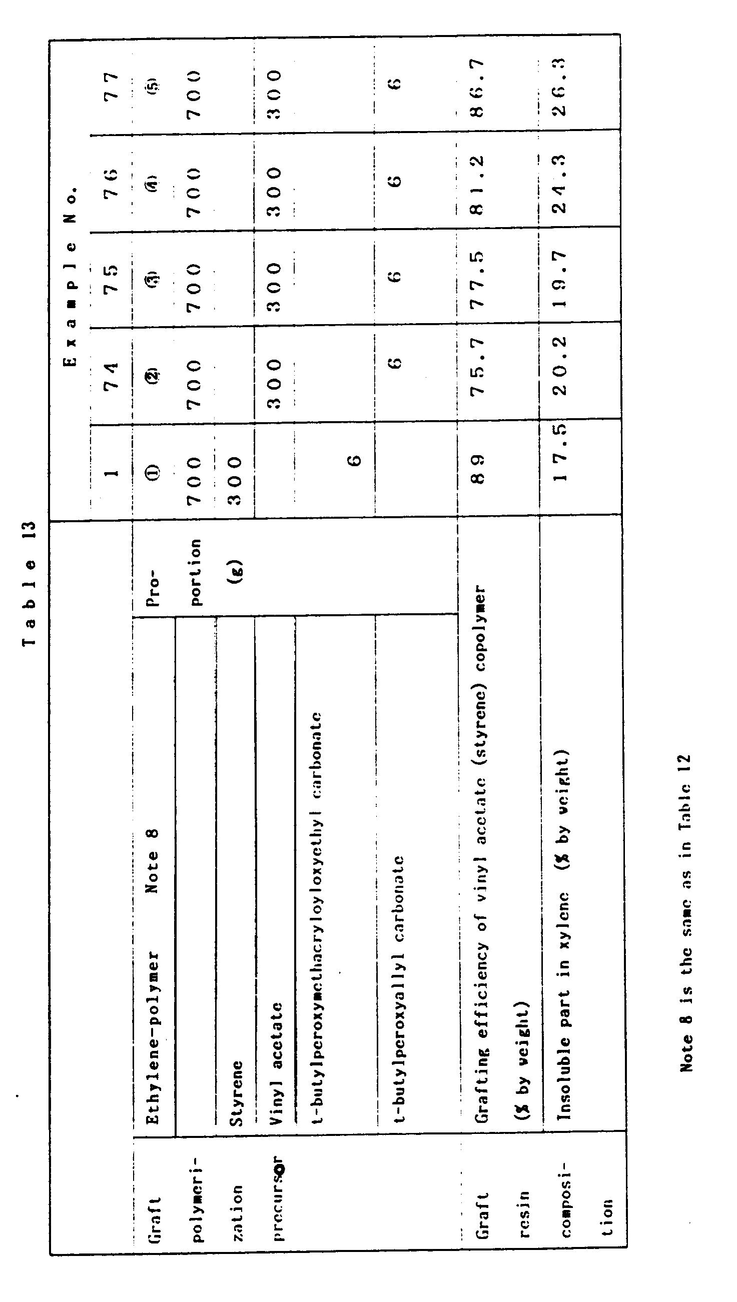

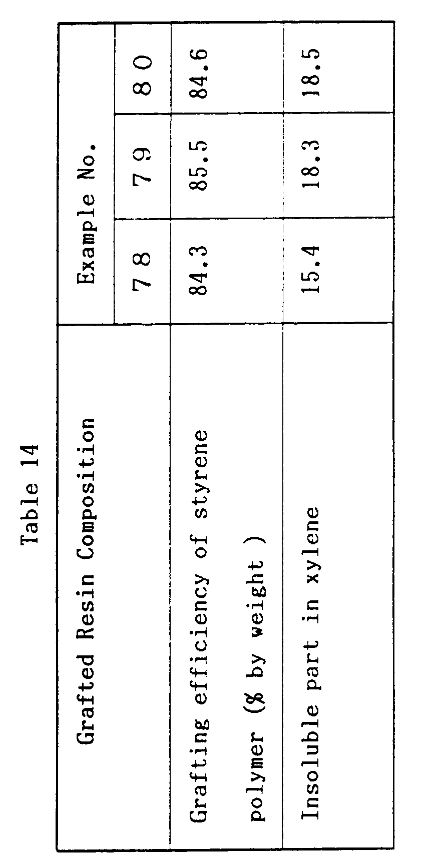

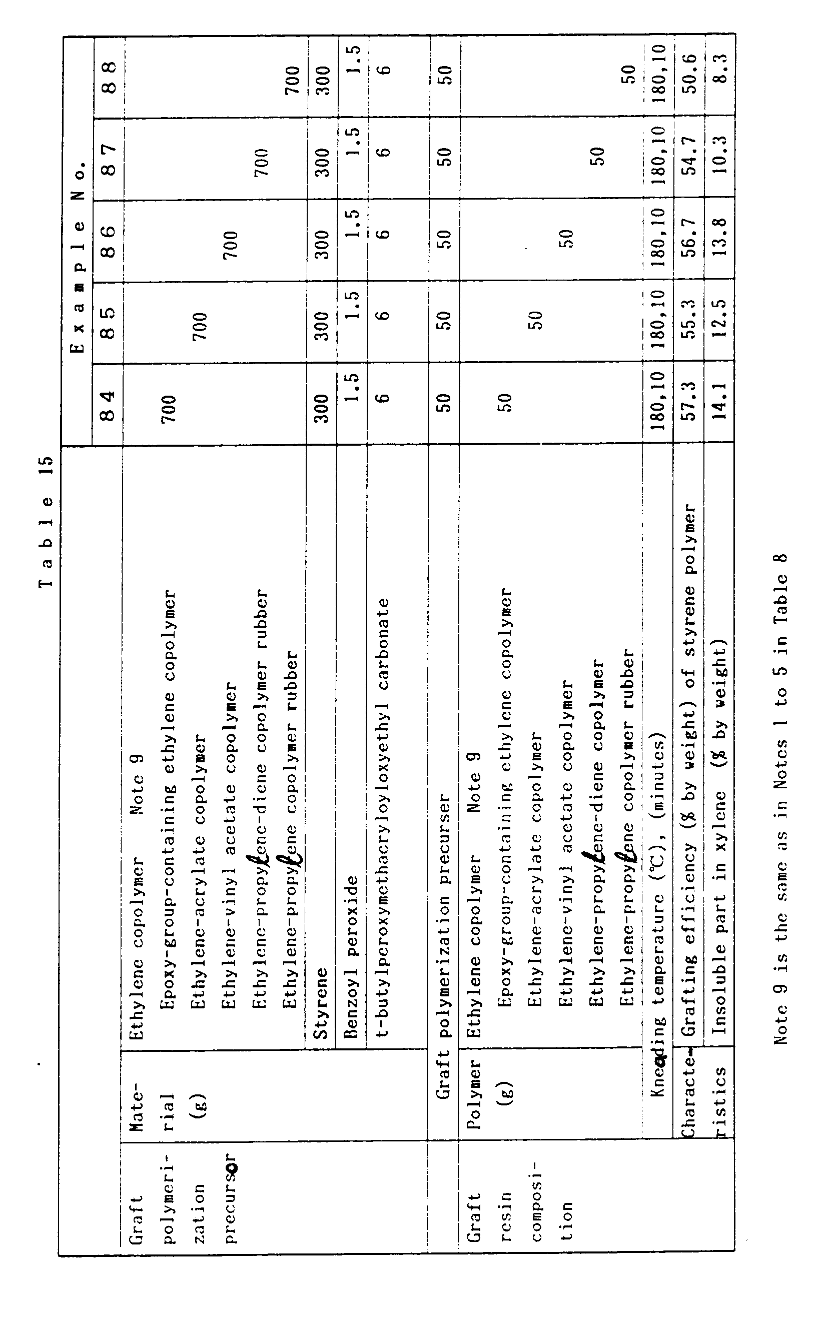

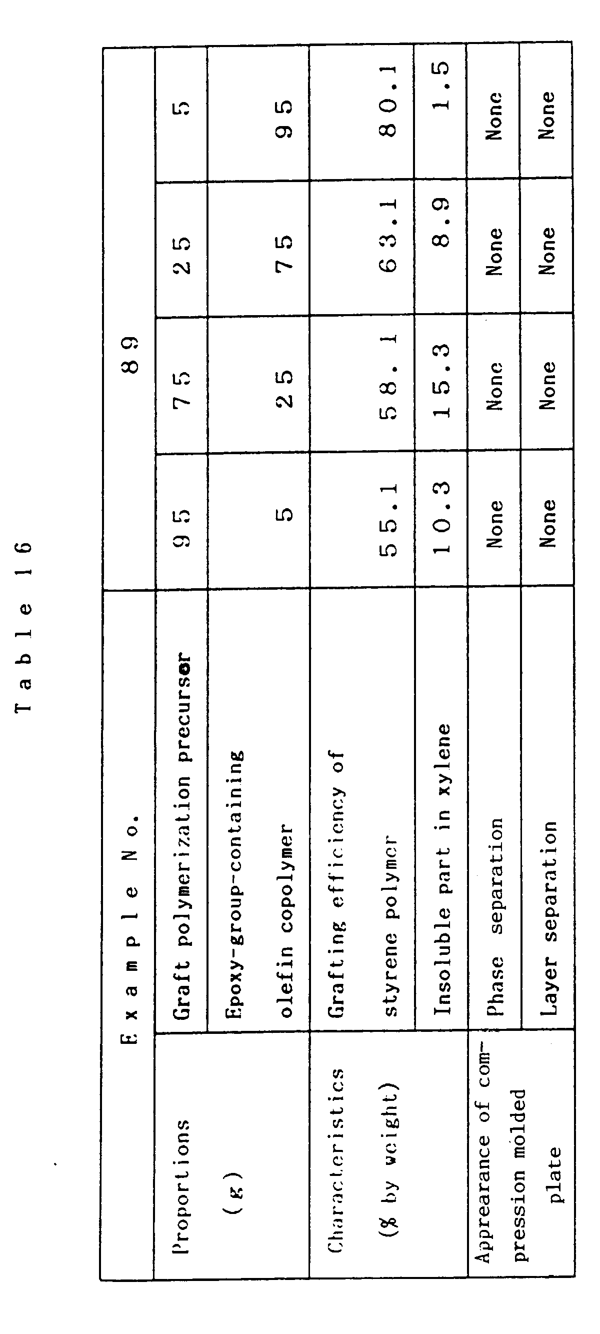

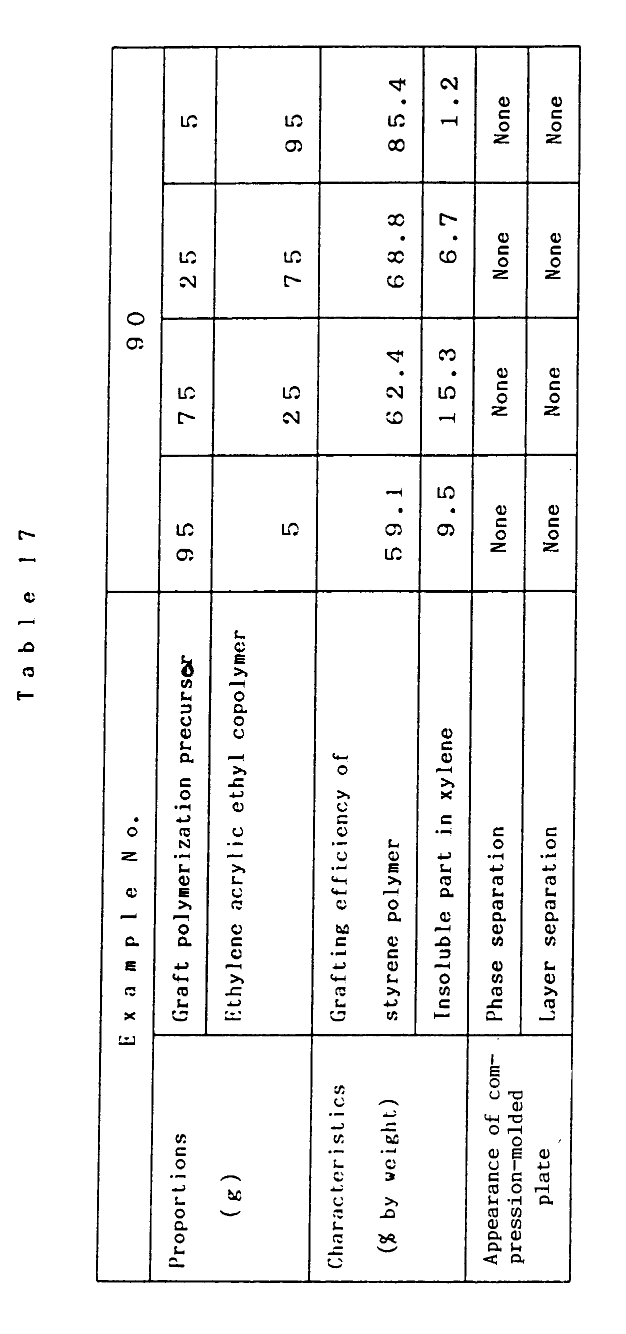

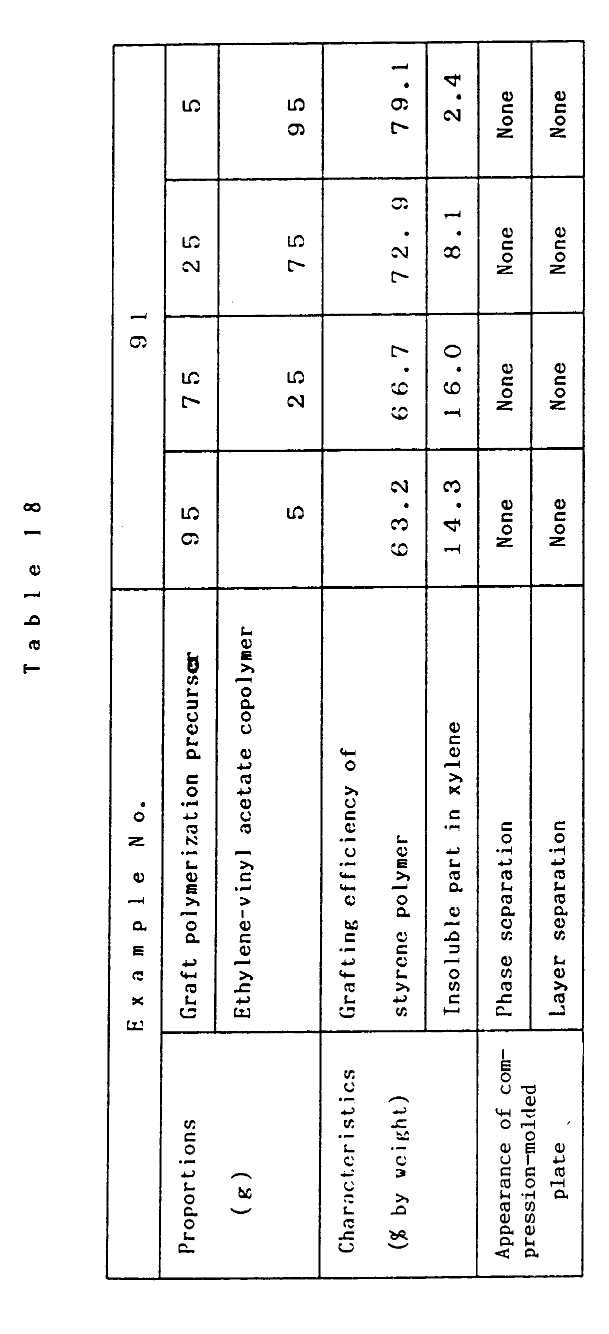

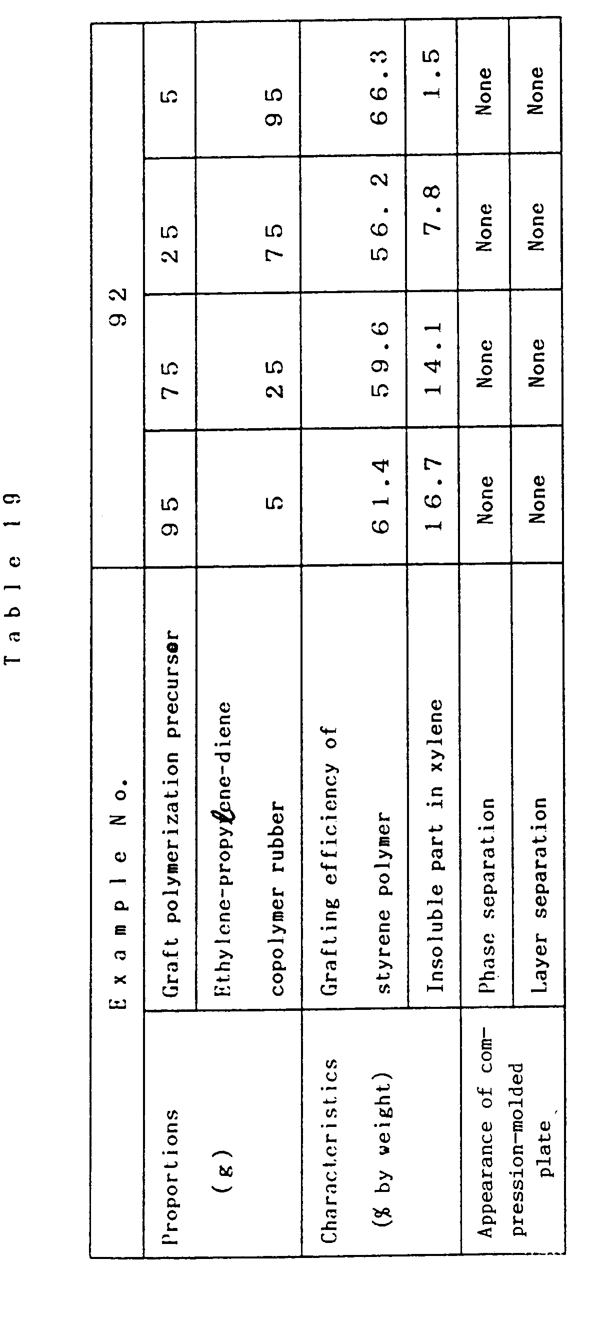

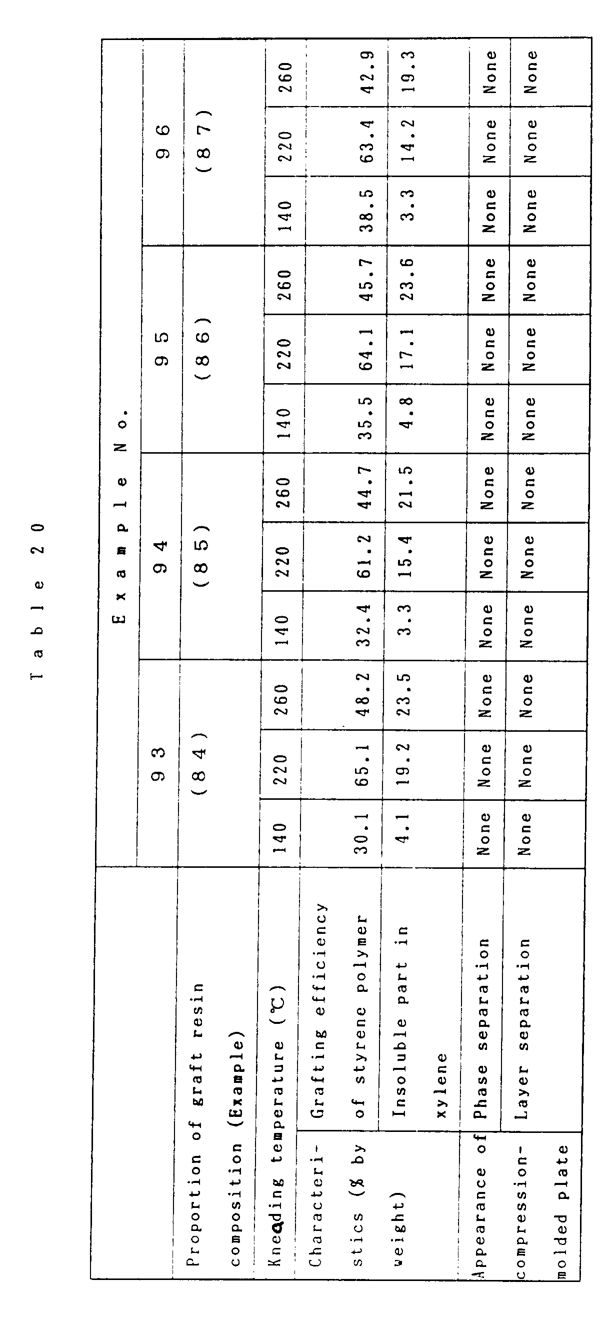

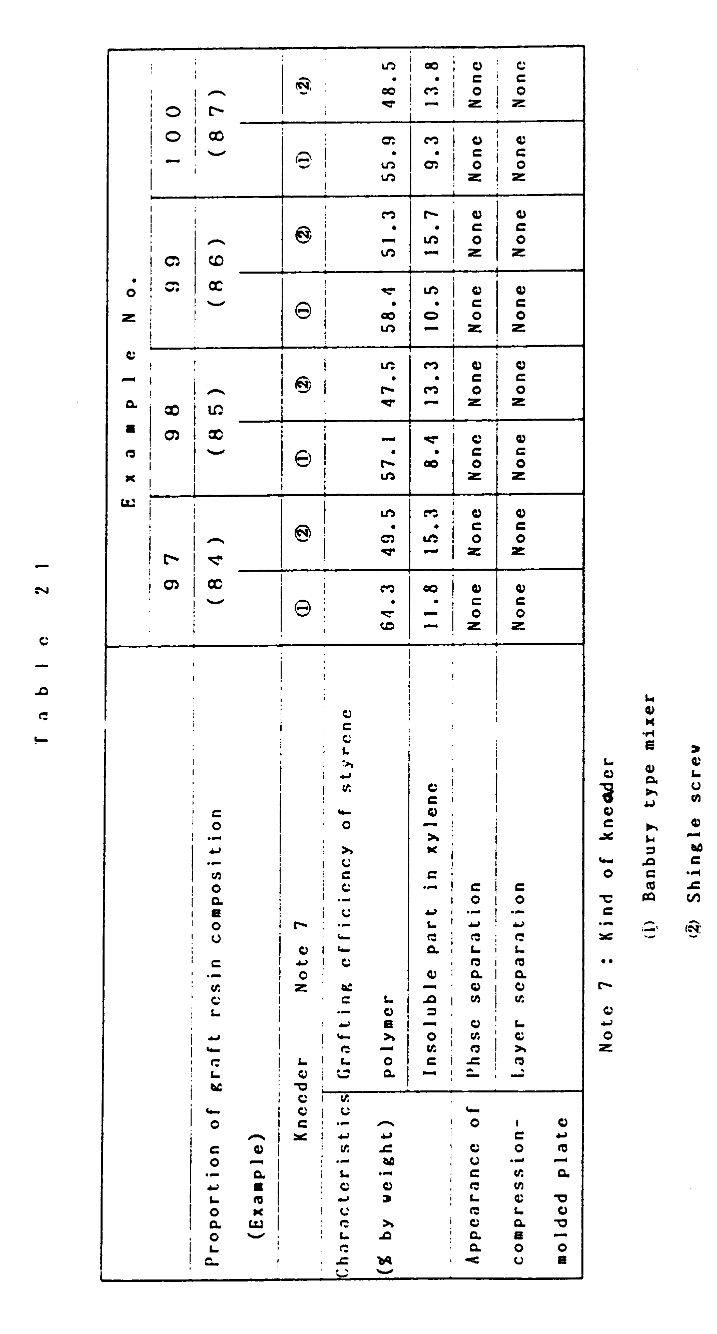

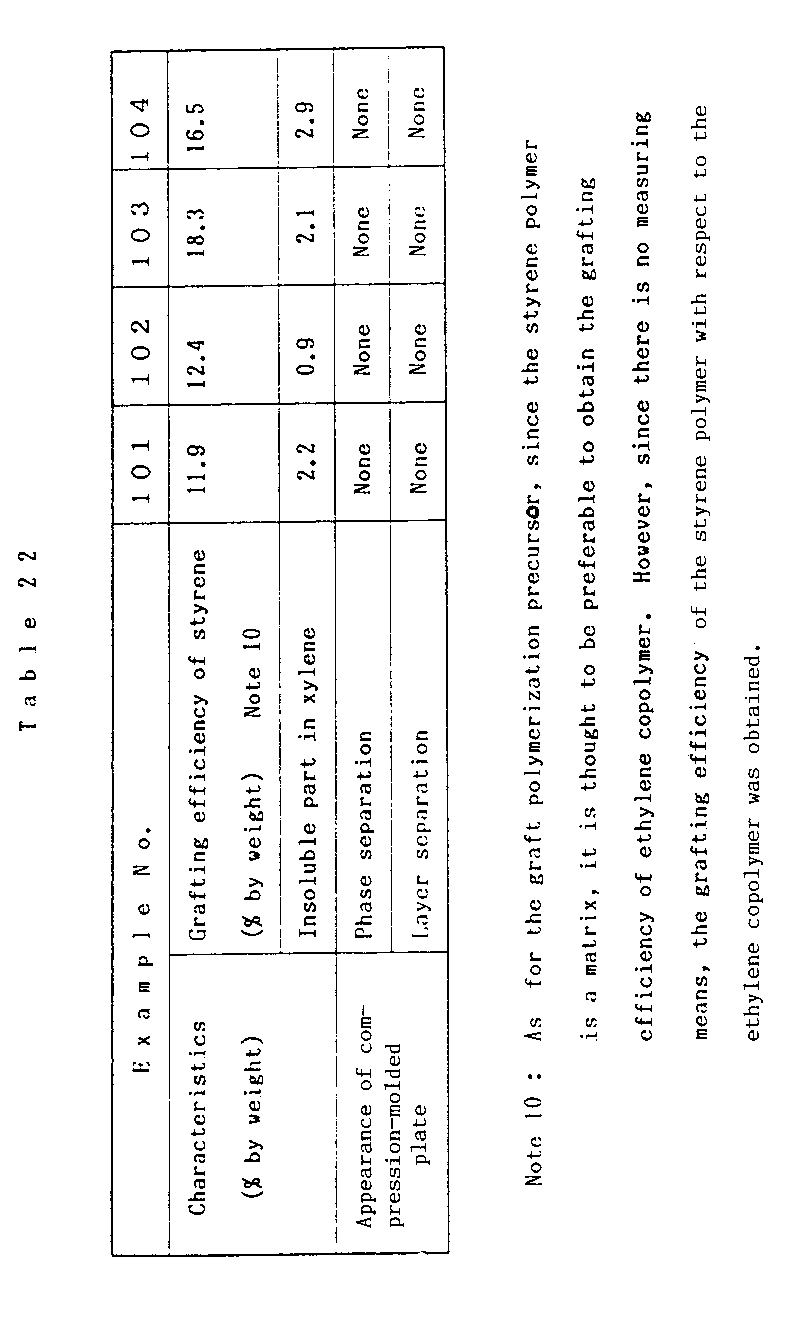

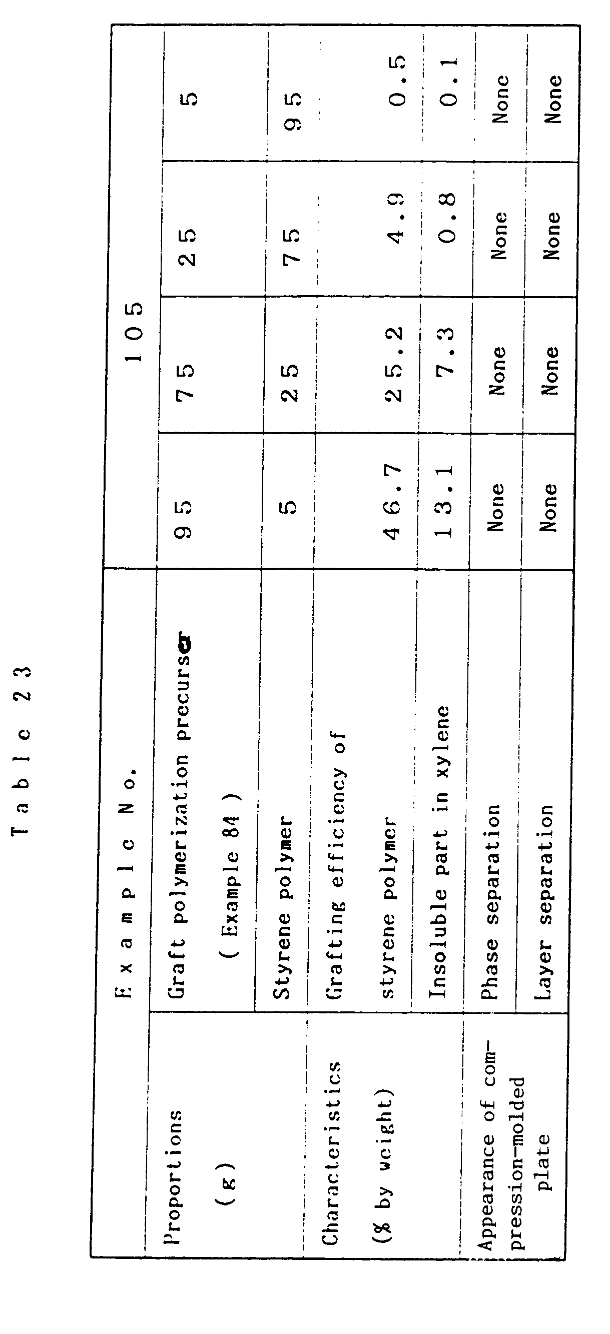

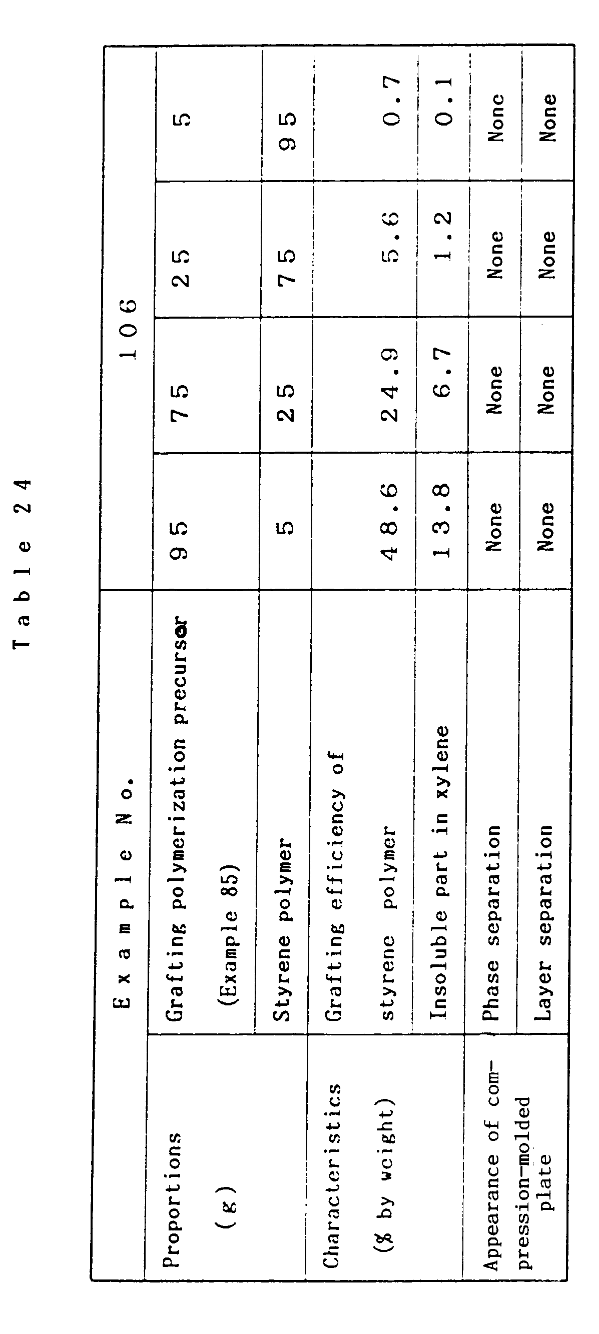

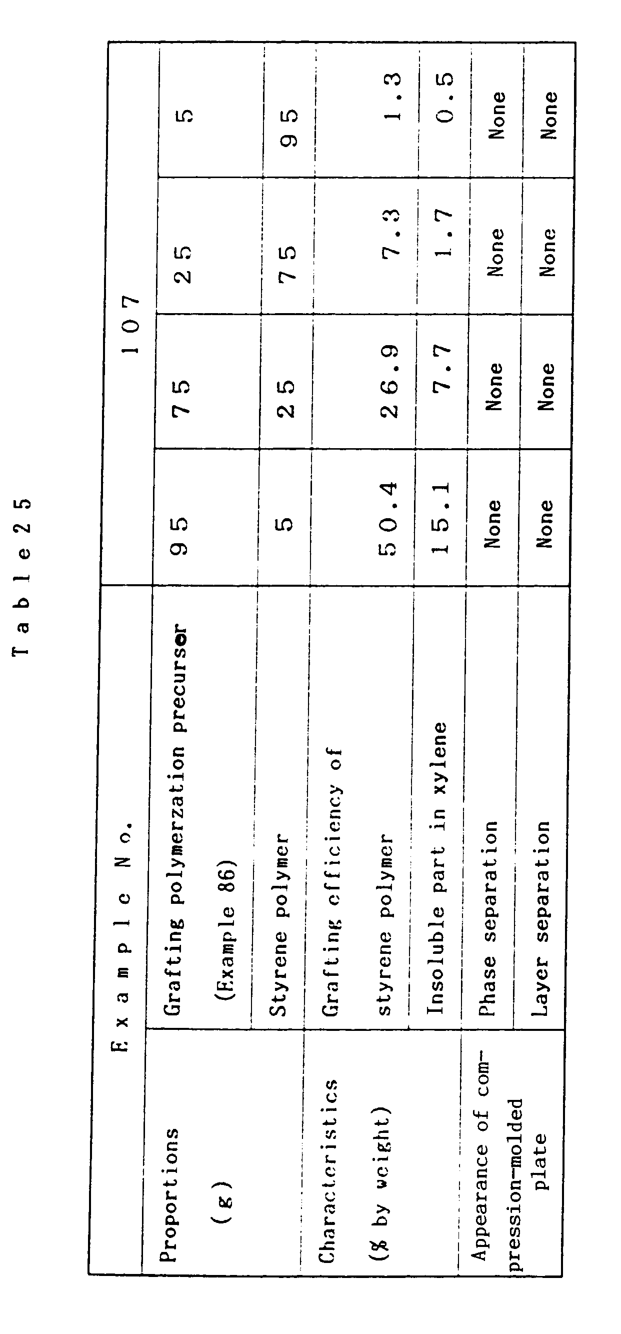

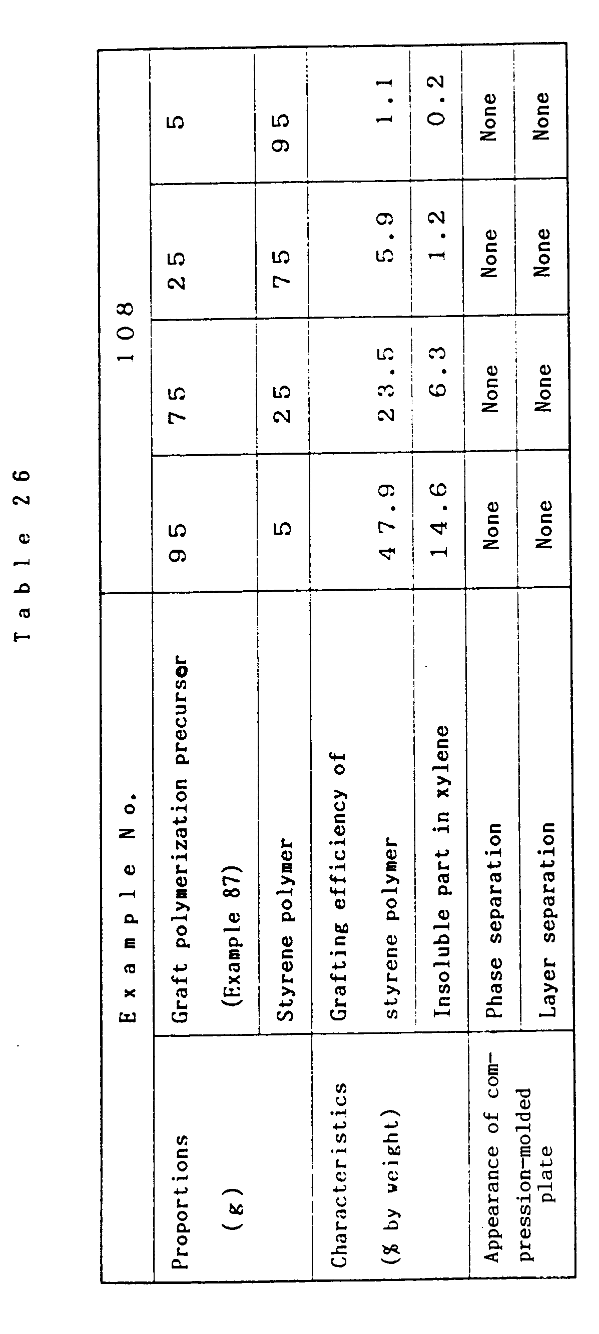

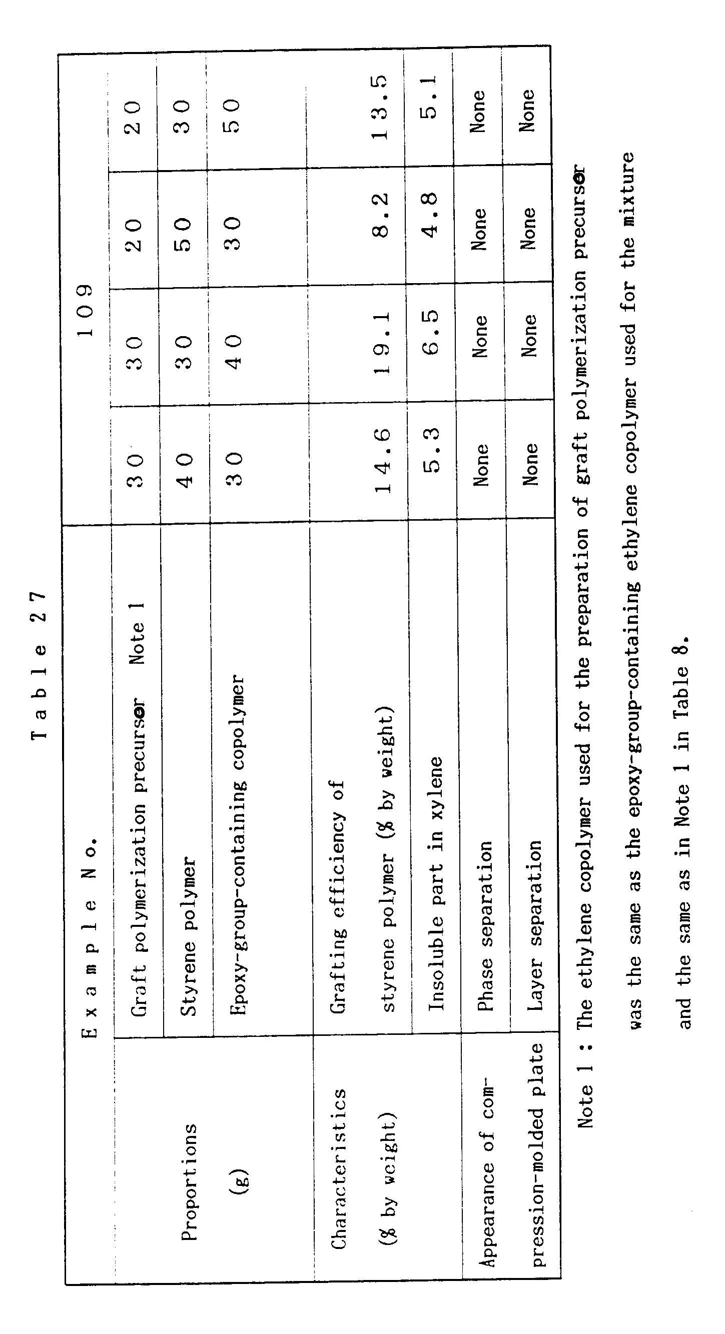

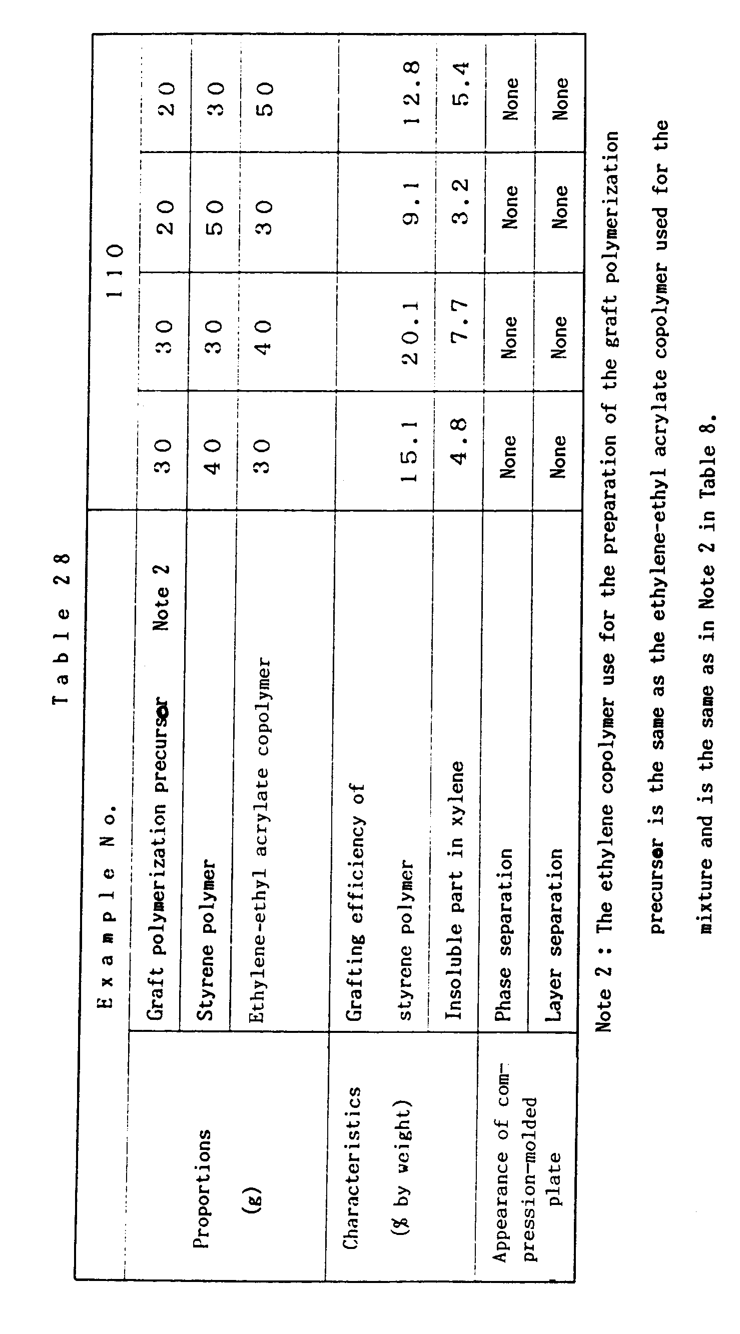

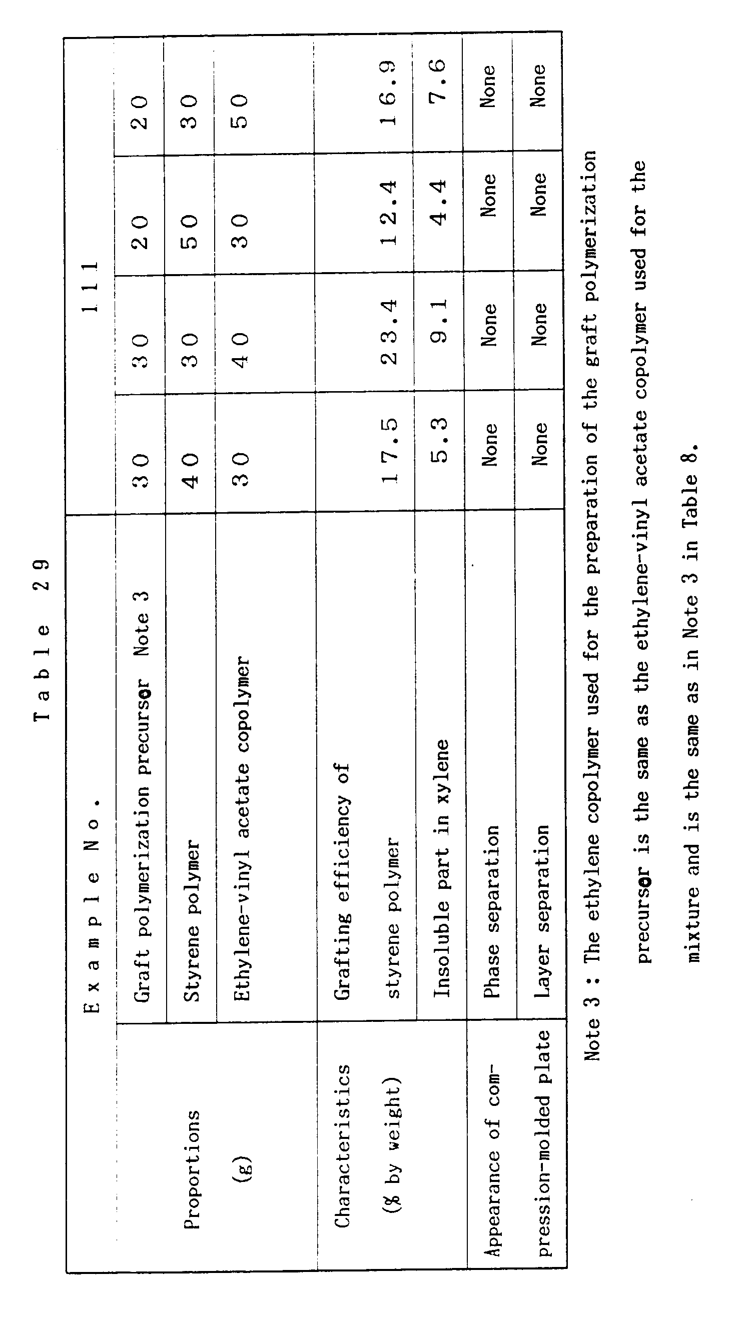

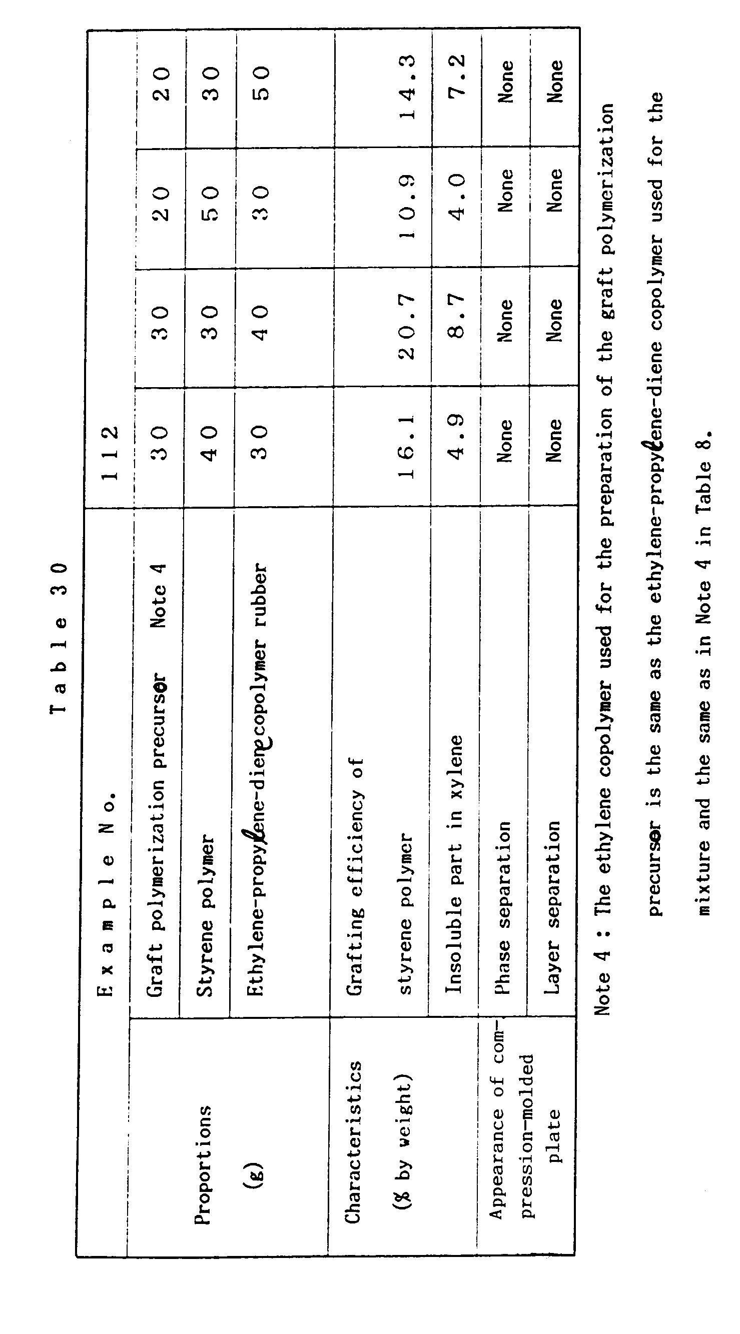

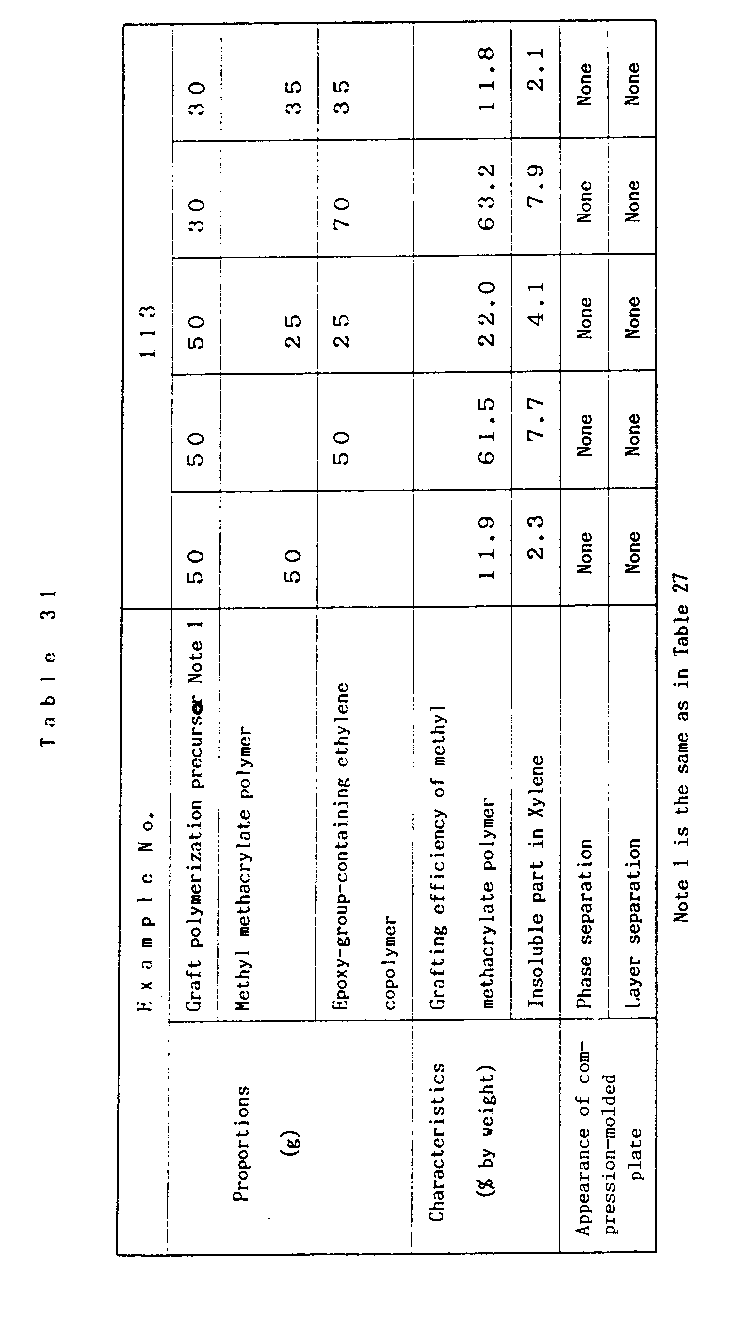

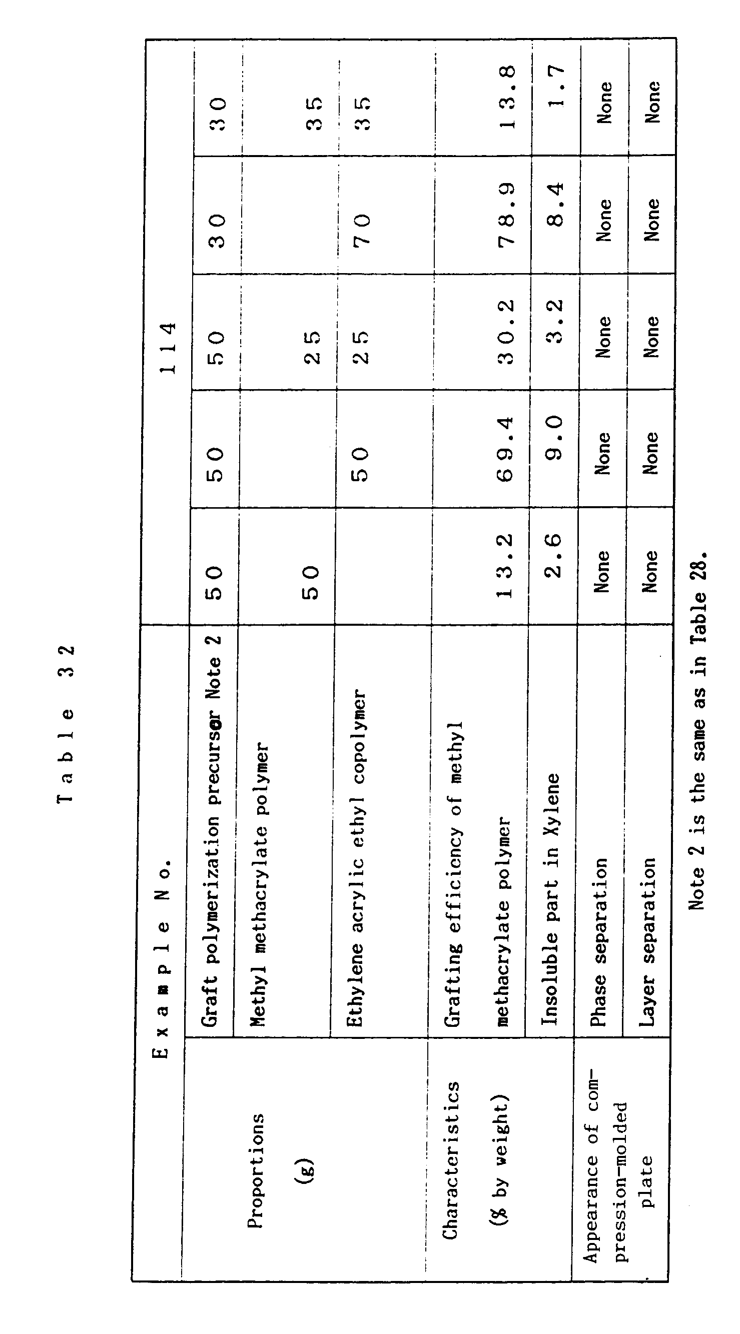

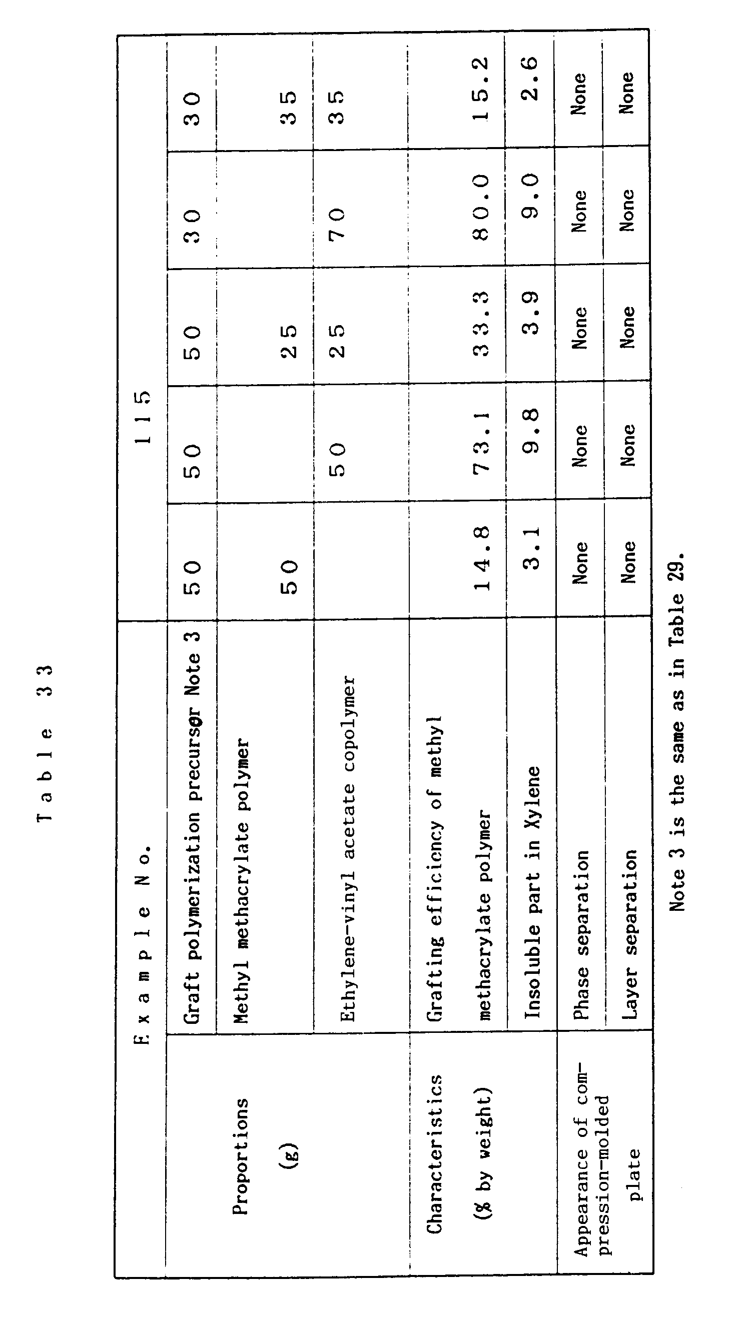

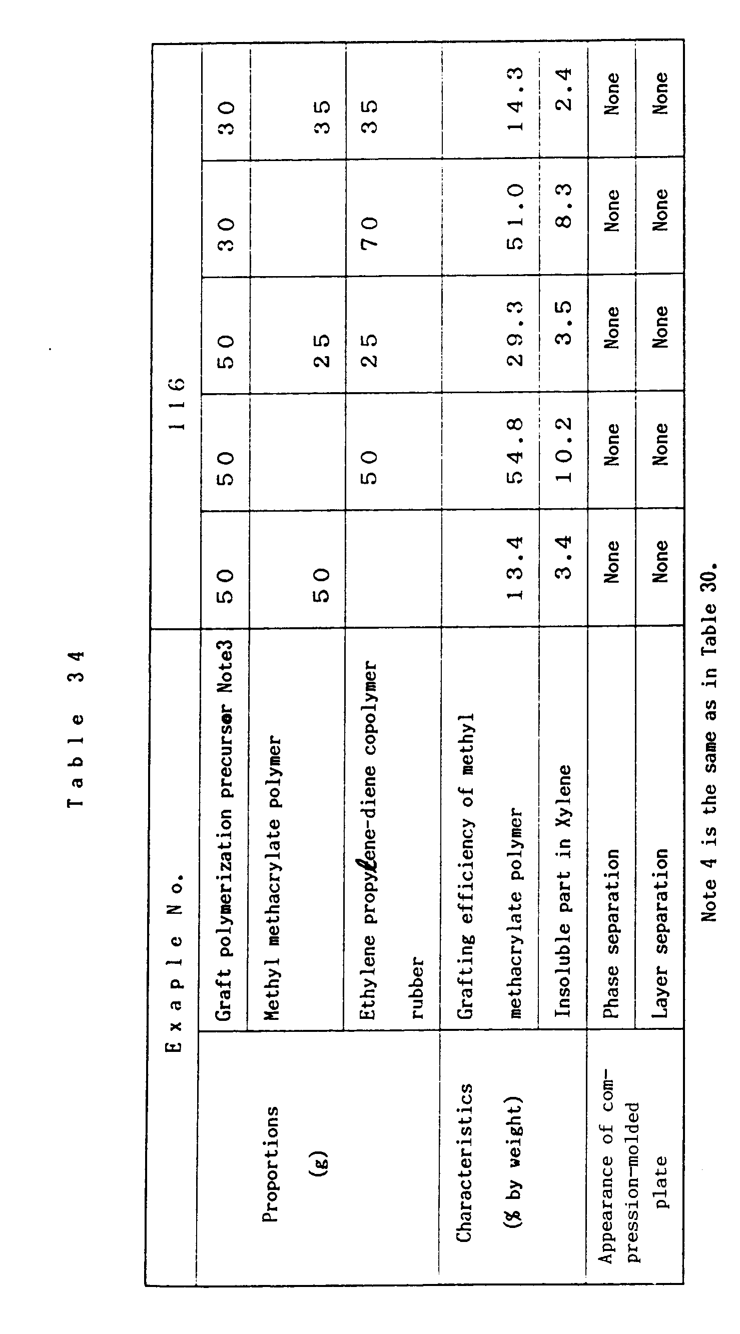

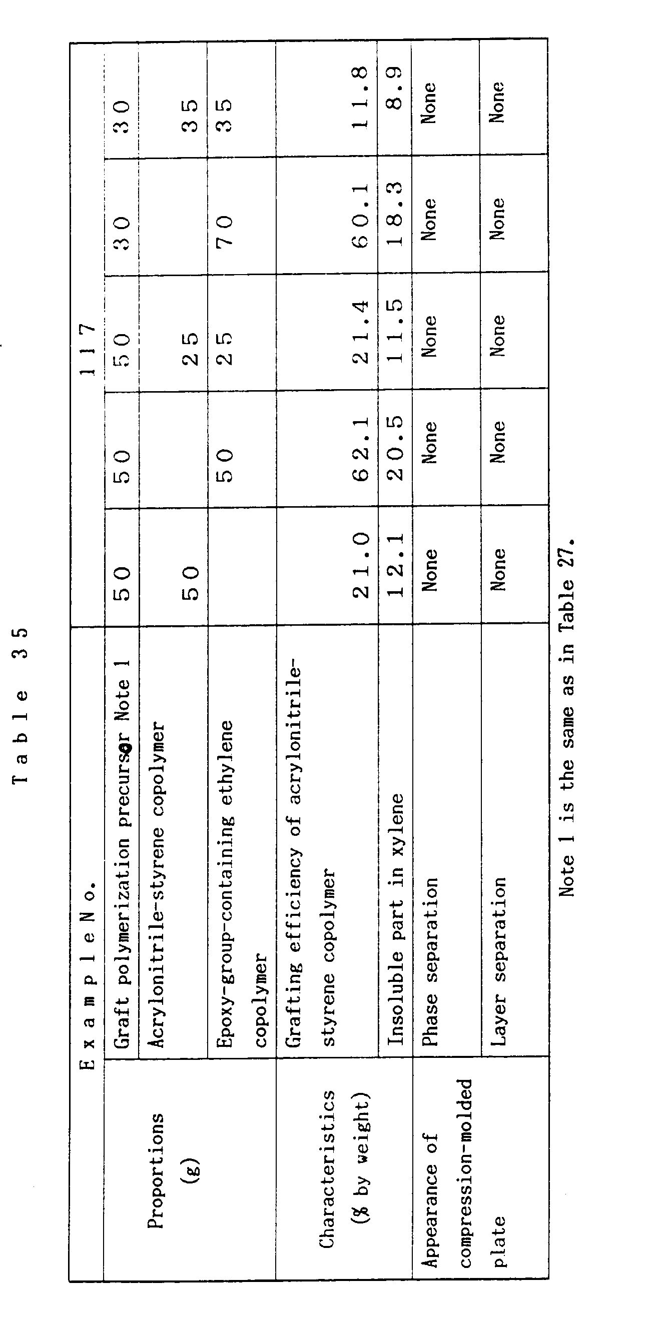

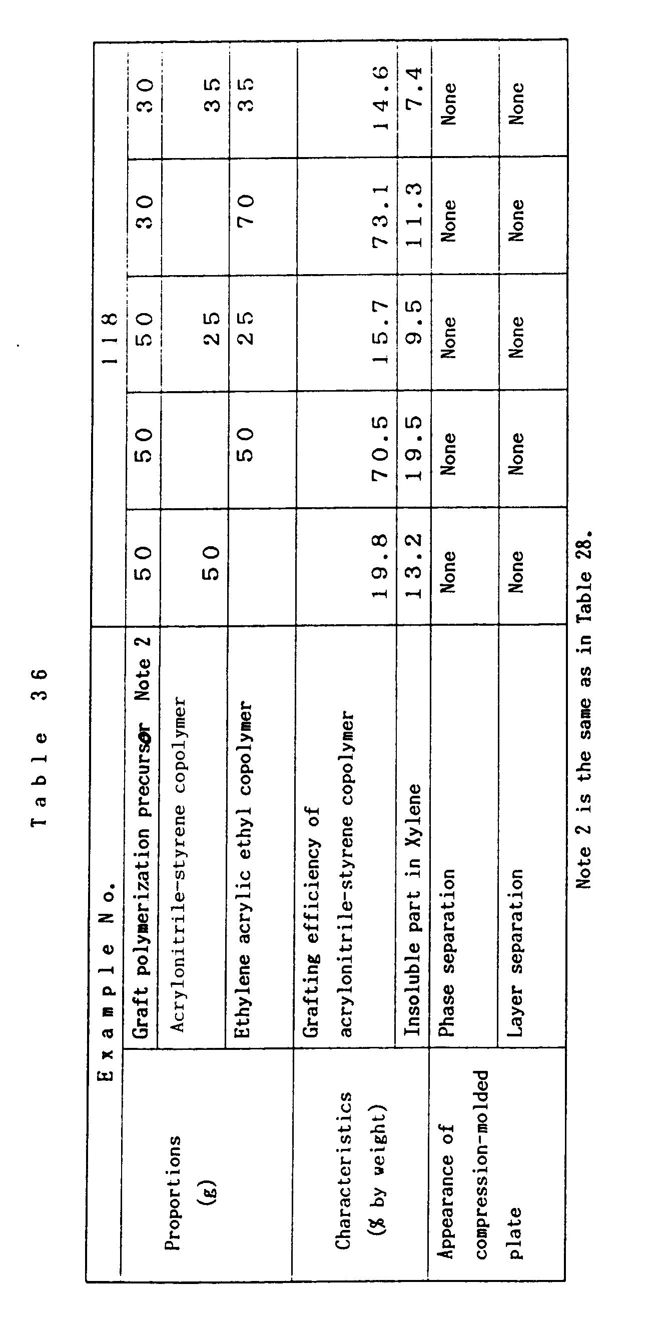

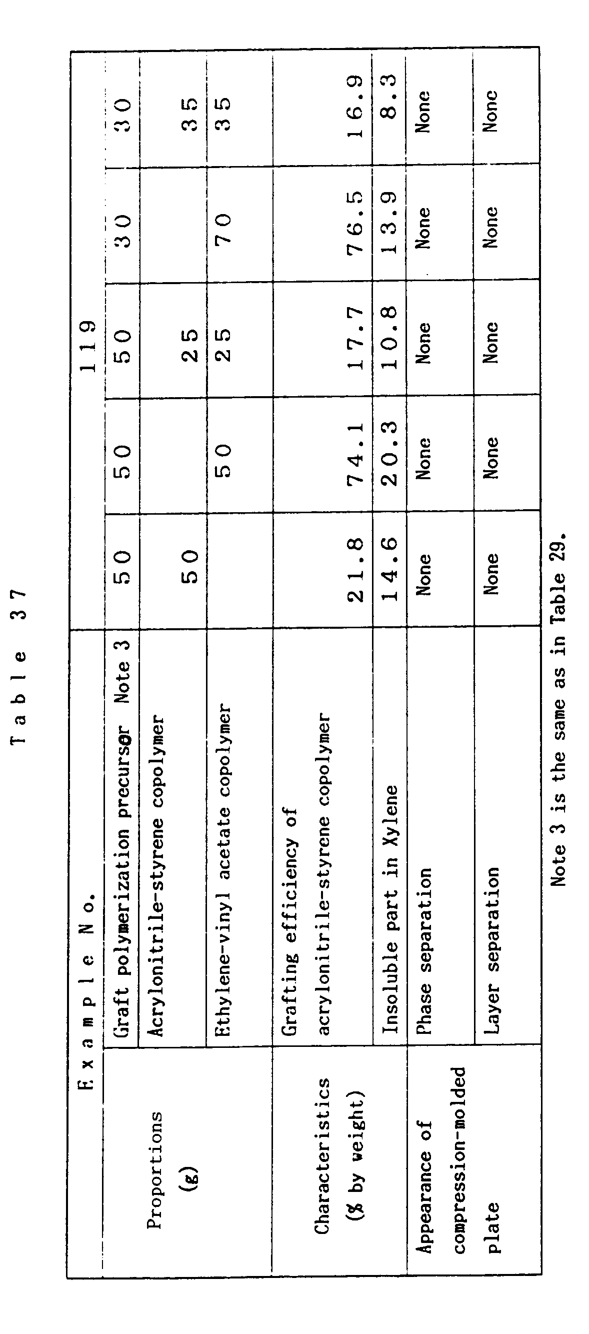

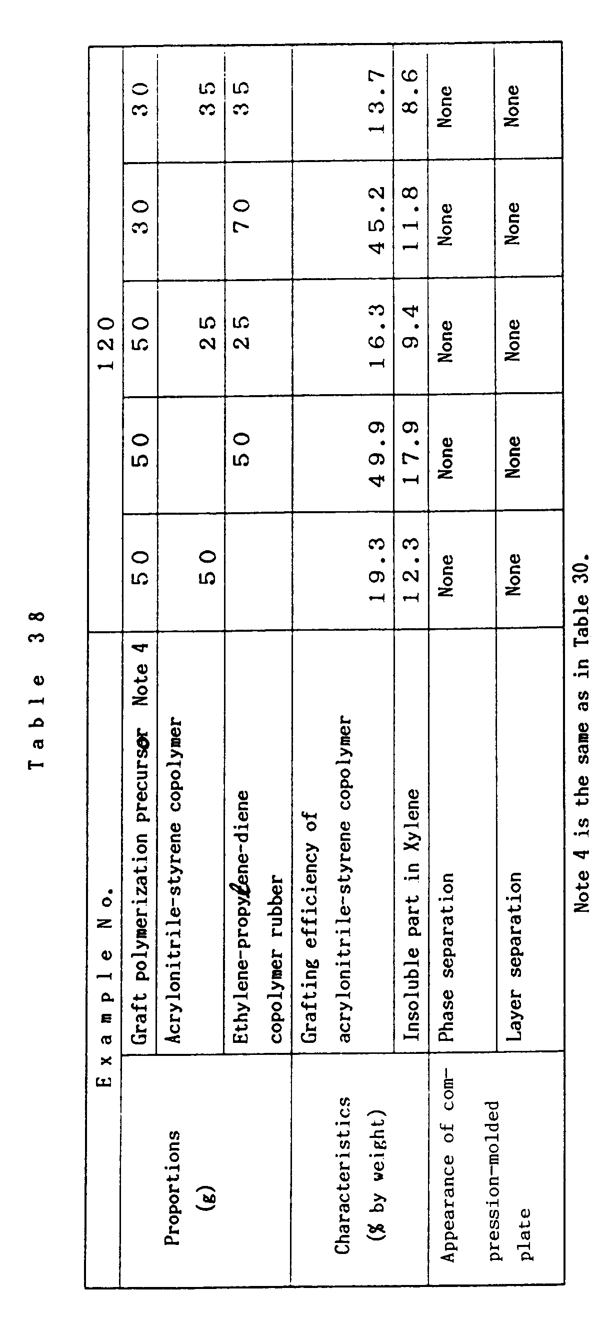

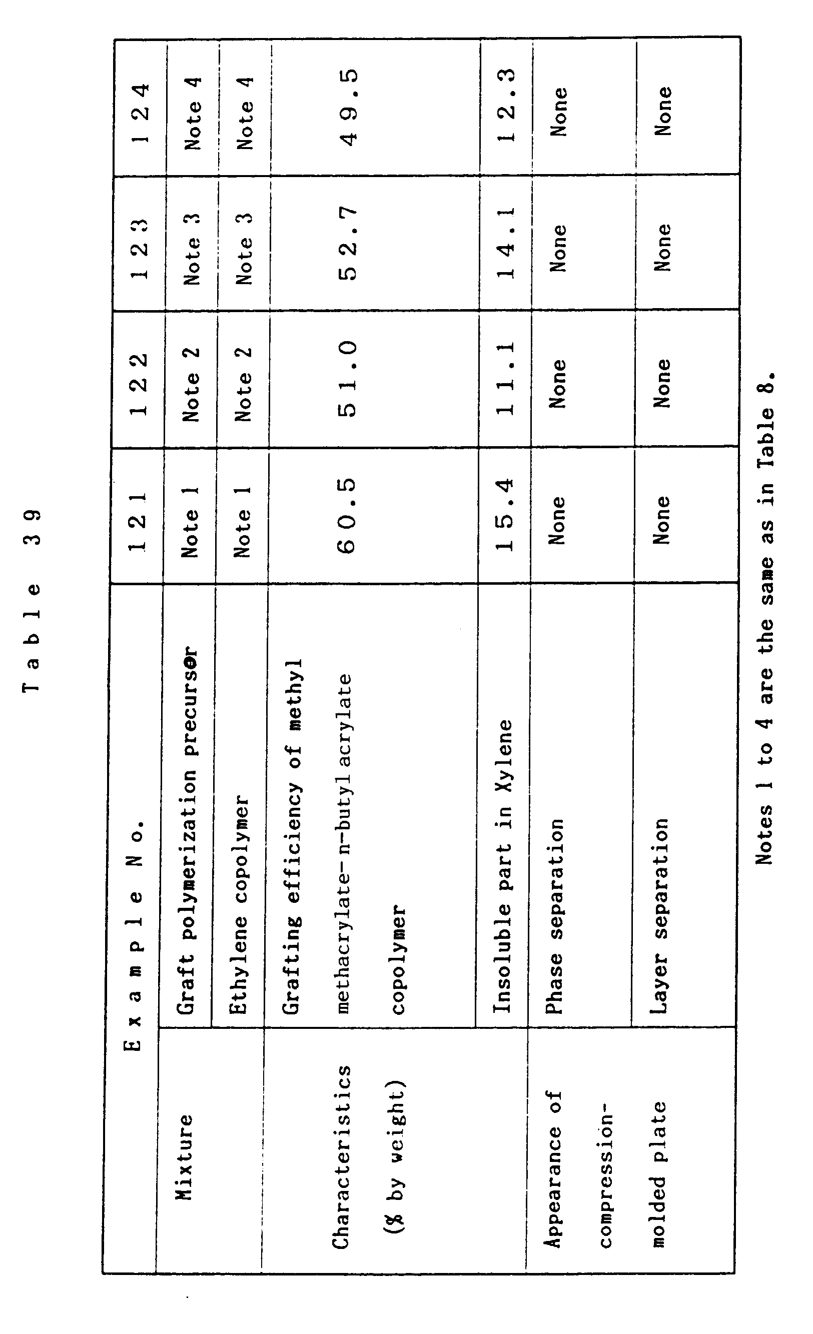

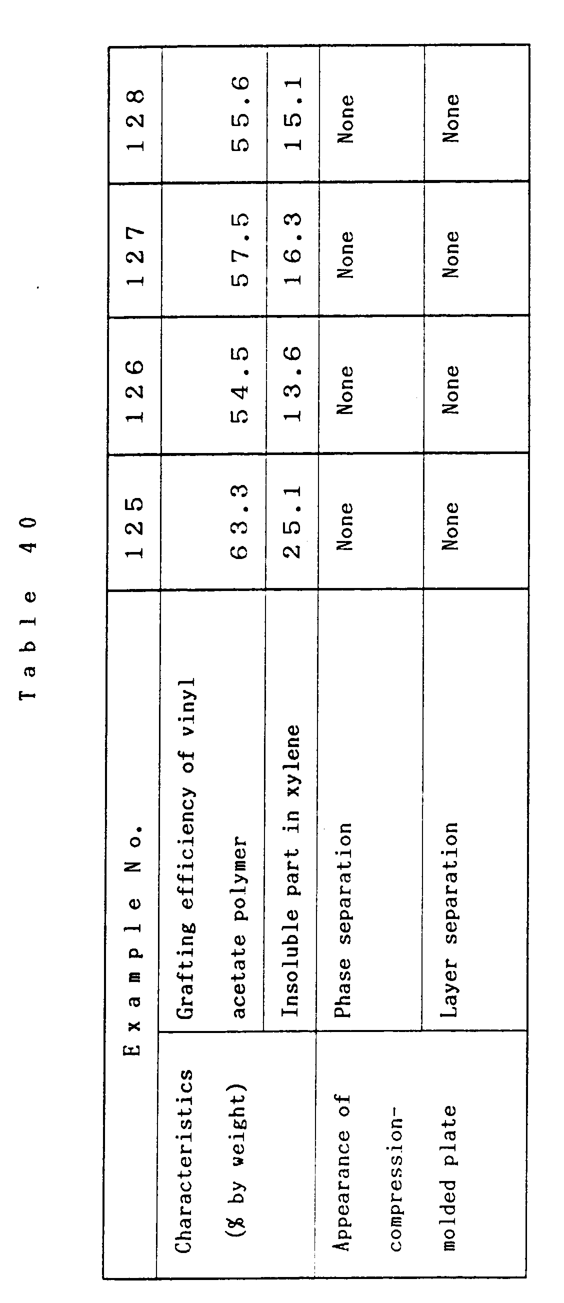

## Claims

1. A method of manufacturing a grafted resin composition by causing a grafting reaction of a graft polymerization precursor or a mixture consisting of 1 to 99% by weight of said graft polymerization precursor and 99 to 1% by weight of a polymer by melting said graft polymerization precursor or said mixture at a temperature of 100 to 300 °C and kneading it, said graft polymerization precursor being a resin composition prepared by
suspending (A) 100 parts by weight of ethylene homopolymer, copolymer or a mixture thereof in water, adding to the resultant suspension a solution obtained by dissolving in (B) 5 to 400 parts by weight of one or more vinyl monomers selected from the group consisting of vinyl aromatic monomers, acrylic or methacrylic ester monomers or mixtures thereof, acrylonitrile, methacrylonitrile or mixtures thereof and vinyl ester monomers, (C) from 0.1 to 10 parts by weight with respect to 100 parts by weight of said vinyl monomers (B) of one or more radical polymerizable organic peroxides represented by general formula (I) 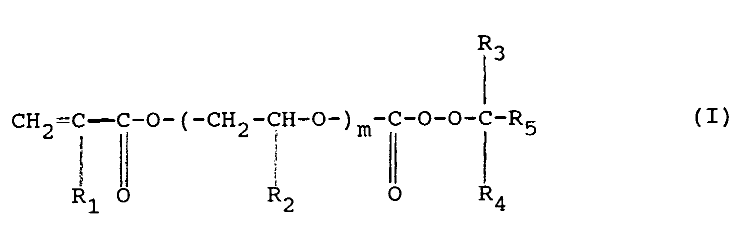 wherein R₁ represents a hydrogen atom or a C₁ -₂ alkyl group, R₂ represents a hydrogen atom or a methyl group, R₃ and R₄ represent C₁ -₄ alkyl groups, R₅ represents an alkyl, phenyl or alkyl-substituted phenyl group containing 1 to 12 carbon atoms or a C₃₋₁₂ cycloalkyl group, and m is 1 or 2, or represented by general formula (II) 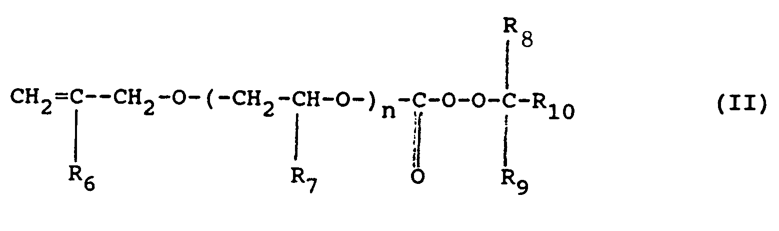 wherein R₆ represents a hydrogen atom or a C₁ -₄ alkyl group, R₇ represents a hydrogen atom or a methyl group, R₈ and Rg represent C₁₋₄ alkyl groups, Rᵢₒ represents an alkyl, phenyl or alkyl-substituted phenyl group or a C₃₋₁₂ cycloalkyl group, and n is 0, 1 or 2,
and (D) a radical polymerization initiator with a decomposition temperature of 40 to 90 _{°} C for obtaining a half reduction period of 10 hours such that it constitutes 0.01 to 5 parts by weight per 100 parts by weight of the sum of said vinyl monomers (B) and said radical polymerizable organic peroxide (C), heating the resultant mixture to less than the decomposition temperature of said initiator (D) until said ethylene polymer (A) is impregnated with at least 50% by weight of said vinyl monomers (B), radical polymerizable organic peroxide (C) and radical polymerization initiator (D), and
elevating the temperature of said water suspension to cause polymerization of said vinyl monomers (B) and said radical polymerizable organic peroxide (C) in said ethylene polymer (A), so that the vinyl/peroxide copolymer contains 0.01 to 0.73 % by weight of active oxygen.
said polymer forming the mixture with said graft polymerization precursor being either one or both members of a group consisting of (i) ethylene homopolymer, copolymer or mixtures thereof and (ii) a vinyl polymer obtained through polymerization of one or more members of a group consisting of aromatic vinyl monomers, acrylic or methacrylic ester monomers or mixtures thereof, methacrylonitrile, acrylonitrile or mixtures thereof and vinyl ester monomers.

2. The method of claim 1 wherein said ethylene polymer (A) is a low density ethylene polymer with a density of 0.910 to 0.935 g/cm³.

3. The method of claim 1 wherein said ethylene polymer (A) is an epoxy-group-containing ethylene copolymer obtained through copolymerization of ethylene and acrylic or methacrylic glycidyl ester or mixtures thereof.

4. The method of claim 3 wherein said epoxy-group-containing ethylene copolymer is obtained through copolymerization of 60 to 99.5% by weight of ethylene and 0.5 to 40% by weight of acrylic or methacrylic glycidyl ester or mixtures thereof.

5. The method of claim 1, wherein said ethylene polymer (A) is composed of ethylene and acrylate or methacrylate ester, or mixtures thereof.

6. The method of claim 5, wherein said ethylene polymer (A) is composed of 50 to 99% by weight of ethylene and 50 to 1 % by weight of acrylate or methacrylate ester, or mixtures thereof.

7. The method of claim 1 wherein said ethylene polymer (A) is composed of ethylene and a vinyl ester.

8. The method of claim 7 wherein said vinyl ester is a vinyl acetate.

9. The method of claim 7 wherein said ethylene polymer (A) is composed of 50 to 99% by weight of ethylene and 50 to 1% by weight of a vinyl ester.

10. The method of claim 1 wherein said ehtylene polymer (A) is an ethylene-propylene copolymer rubber.

11. The method of claim 1 wherein said ethylene polymer (A) is an ethylene-propylene-diene copolymer rubber.

12. The method of claim 1 wherein said polymer kneaded with said graft polymerization precursor has the same monomer composition as the ethylene polymer in said graft polymerization precursor.

13. The method of claim 2 wherein said polymer kneaded with said graft polymerization precursor is a low density ethylene polymer with the same density as the low-density ethylene polymer in said graft polymerization precursor.

14. The method of claim 1 wherein at least 50% by weight of said vinyl monomer or monomers used for the preparation of said graft polymerization precursor consists of aromatic vinyl monomer or monomers.

15. The method of claim 1 wherein at least 50% by weight of said vinyl monomer or monomers used for the preparation of said graft polymerization precursor consists of acrylate or methacrylate monomer or monomers.

16. The method of claim 1 wherein said polymer kneaded with said graft polymerization precursor has the same monomer composition as said vinyl monomer or monomers in said graft polymerization precursor

## Patentansprüche

1. Verfahren zum Herstellen einer Pfropfharzzusammensetzung durch Verursachen einer Pfropfreaktion eines Pfropfpolymerisationsvorläufers oder eines Gemisches, bestehend aus 1 bis 99 Gew.-% des Pfropfpolymerisationsvorläufers und 99 bis 1 Gew.-% eines Polymers, durch Schmelzen des Pfropfpolymerisationsvorläufers oder des Gemisches bei einer Temperatur von 100 bis 300 _{°} C und Kneten desselben, wobei der Pfropfpolymerisationsvorläufer eine Harzzusammensetzung ist, die hergestellt ist durch
Suspendieren von (A) 100 Gew.-Teilen Ethylenhomopolymer, -copolymer oder eines Gemisches davon in Wasser,
Zufügen zu der erhaltenen Suspension einer Lösung, erhalten durch Auflösen von (C) 0,1 bis 10 Gew.-Teilen, bezogen auf 100 Gew.-Teile der Vinylmonomere (B), eines oder mehrerer Radikal-polymerisierbaren organischen Peroxide, dargestellt durch die allgemeine Formel (I) 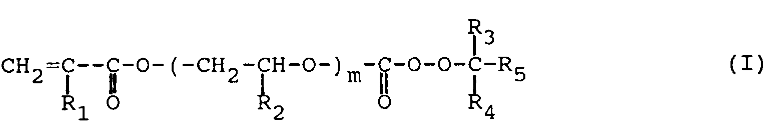 worin R₁ ein Wasserstoffatom oder eine C₁ -₂-Alkylgruppe darstellt, R₂ ein Wasserstoffatom oder eine Methylgruppe darstellt, R₃ und R₄ C₁ -₄-Alkylgruppen darstellen, R₅ eine Alkyl-, Phenyl- oder Alkylsubstitutierte Phenylgruppe, enthaltend 1 bis 12 Kohlenstoffatome, oder eine C3-12-Cycloalkylgruppe darstellt, und m 1 oder 2 ist,
oder dargestellt durch die allgemeine Formel (11) 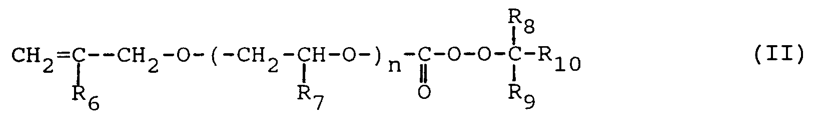 worin R₆ ein Wasserstoffatom oder eine C₁ -₄-Alkylgruppe darstellt, R₇ ein Wasserstoffatom oder eine Methylgruppe darstellt, R₈ und Rg C₁ -₄-Alkylgruppen darstellen, R₁₀ eine Alkyl-, Phenyl- oder Alkylsubstituierte Phenylgruppe oder eine C3-12-Cycloalkylgruppe darstellt, und n 0, 1 oder 2 ist,
in (B) 5 bis 400 Gew.-Teilen eines oder mehrerer Vinylmonomere, ausgewählt aus der Gruppe, bestehend aus aromatischen Vinylmonomeren, Acryloder Methacrylestermonomeren oder Gemischen daraus, Acrylonitril, Methacrylonitril oder Gemischen daraus und Vinylestermonomeren,
und (D) eines Radikalpolymerisationsinitiators mit einer Zersetzungstemperatur von 40 bis 90 _{°} C, um eine Halbreduktionszeit von 10 Stunden zu erhalten, so daß er 0,01 bis 5 Gew.-Teile pro 100 Gew.-Teile der Summe der Vinylmonomere (B) und des radikalpolymerisierbaren organischen Peroxids (C) ausmacht,
Erwärmen des erhaltenen Gemisches auf weniger als die Zersetzungstemperatur des Initiators (D), bis das Ethylenpolymer (A) mit mindestens 50 Gew.-% der Vinylmonomere (B), dem radikalpolymerisierbaren organischen Peroxid (C) und dem Radikalpolymerisationsinitiator (D) imprägniert ist, und
Erhöhen der Temperatur der Wassersuspension, um eine Polymerisation der Vinylmonomere (B) und des radikalpolymerisierbaren organischen Peroxids (C) in dem Ethylenpolymer (A) zu verursachen, so daß das Vinyl/Peroxidcopolymer 0,01 bis 0,73 Gew.-% aktiven Sauerstoff enthält,
wobei das Polymer, das das Gemisch mit dem Pfropfpolymerisationsvorläufer bildet, entweder eines von oder beide Mitglieder der Gruppe, bestehend aus (i) Ethylenhomopolymer, -copolymer oder Gemischen daraus, und (ii) einem Vinylpolymer, erhalten durch Polymerisation eines oder mehrerer Mitglieder aus der Gruppe, bestehend aus aromatischen Vinylmonomeren, Acryl- oder Methacrylestermonomeren oder Gemischen daraus, Methacrylonitril, Acrylonitril oder Gemischen daraus und Vinylestermonomeren, ist.

2. Verfahren nach Anspruch 1, wobei das Ethylenpolymer (A) ein Ethylenpolymer niedriger Dichte mit einer Dichte von 0,910 bis 0,935 g/cm³ ist.

3. Verfahren nach Anspruch 1, wobei das Ethylenpolymer (A) ein Epoxygruppen-haltiges Ethylencopolymer ist, das durch Copolymerisation von Ethylen und Acryl- oder Methacrylglycidylester oder Gemischen daraus erhalten ist.

4. Verfahren nach Anspruch 3, wobei das Epoxygruppen-haltige Ethylencopolymer durch Copolymerisation von 60 bis 99,5 Gew.-% Ethylen und 0,5 bis 40 Gew.-% Acryl- oder Methacrylglycidylester oder Gemischen daraus erhalten ist.

5. Verfahren nach Anspruch 1, wobei das Ethylenpolymer (A) aus Ethylen und Acrylat- und Methacrylatester oder Gemischen daraus zusammengesetzt ist.

6. Verfahren nach Anspruch 5, wobei das Ethylenpolymer (A) aus 50 bis 99 Gew.-% Ethylen und 50 bis 1 Gew.-% Acrylat- oder Methacrylatester oder Gemischen daraus zusammengesetzt ist.

7. Verfahren nach Anspruch 1, wobei das Ethylenpolymer (A) aus Ethylen und einem Vinylester zusammengesetzt ist.

8. Verfahren nach Anspruch 7, wobei der Vinylester ein Vinylacetat ist.

9. Verfahren nach Anspruch 7, wobei das Ethylenpolymer (A) aus 50 bis 99 Gew.-% Ethylen und 50 bis 1 Gew.-% eines Vinylesters zusammengesetzt ist.

10. Verfahren nach Anspruch 1, wobei das Ethylenpolymer (A) ein Ethylen-Propylen-Copolymergummi ist.

11. Verfahren nach Anspruch 1, wobei das Ethylenpolymer (A) ein Ethylen-Propylen-Diencopolymergummi ist.

12. Verfahren nach Anspruch 1, wobei das Polymer, das mit dem Pfropfpolymerisationsvorläufer verknetet wird, dieselbe Monomerzusammensetzung wie das Ethylenpolymer in dem Pfropfpolymerisationsvorläufer hat.

13. Verfahren nach Anspruch 2, wobei das Polymer, das mit dem Pfropfpolymerisationsvorläufer verknetet wird, ein Ethylenpolymer mit derselben Dichte wie das Ethylenpolymer niedriger Dichte in dem Pfropfpolymerisationsvorläufer ist.

14. Verfahren nach Anspruch 1, wobei mindestens 50 Gew.-% des Vinylmonomers oder der -monomere, das (die) für die Herstellung des Pfropfpolymerisationsvorläufers verwendet wird (werden), aus aromatischem Vinylmonomer oder -monomeren bestehen.

15. Verfahren nach Anspruch 1, wobei mindestens 50 Gew.-% des Vinylmonomers oder -monomere, das (die) für die Herstellung des Pfropfpolymerisationsvorläufers verwendet wird (werden), aus Acrylat- oder Methacrylatmonomer oder -monomeren bestehen.

16. Verfahren nach Anspruch 1, wobei das Polymer, das mit dem Pfropfpolymerisationsvorläufer verknetet wird, dieselbe Monomerzusammensetzung, wie das Vinylmonomer oder -monomere in dem Pfropfpolymerisationsvorläufer hat.

## Revendications

1. Procédé de préparation d'une composition de résine greffée en provoquant une réaction de greffage entre un percurseur de polymérisation greffage ou un mélange constitué de 1 à 99 % en poids dudit précurseur de polymérisation greffage et 99 à 1 % en poids d'un polymère en fondant ledit précurseur de polymérisation greffage ou ledit mélange à une température de 100 à 300 _{°} C et en le malaxant, ledit précurseur de polymérisation greffage étant une composition de résine préparée par
mise en suspension (A) de 100 parties en poids d'un homopolymère, d'un copolymère de l'éthylène ou d'un mélange de ceux-ci dans de l'eau,
addition à la suspension obtenue d'une solution obtenue en dissolvant dans (B) 5 à 400 parties en poids d'un ou plusieurs monomères vinyliques choisis dans le groupe constitué par des monomères vinylaromatiques, des esters acryliques ou méthacryliques monomères ou des mélanges de ceux-ci, l'acrylonitrile, le méthacrylonitrile ou des mélanges de ceux-ci et des esters vinyliques monomères, (C) de 0,01 à 10 parties en poids pour 100 parties en poids desdits monomères vinyliques (B) d'un ou plusieurs peroxydes organiques polymérisables par voie radicalaire représentés par la formule générale (I) 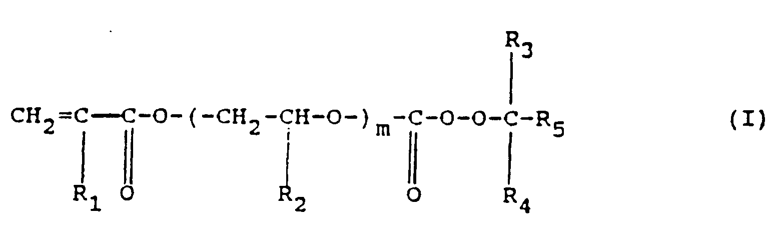 dans laquelle R₁ représente un atome d'hydrogène ou un groupe alkyle en C₁₋₂, R₂ représente un atome d'hydrogène ou un groupe méthyle, R₃ et R₄ représentent des groupes alkyle en C,-₄, R₅ représente un groupe alkyle, phényle ou phényle à substitution alkyle en C₁₋₁₂, ou un groupe cycloalkyle en C3 -12, et m est 1 ou 2, ou représentés par la formule générale (II) 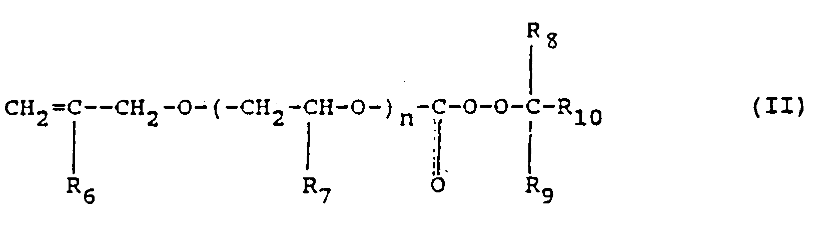 dans laquelle R₆ représente un atome d'hydrogène ou un groupe alkyle en C₁₋₄, R₇ représente un atome d'hydrogène ou un groupe méthyle, R₈ et Rg représentent des groupes alkyle en C₁₋₄, R₁₀ représente un groupe alkyle, phényle ou phényle à substitution alkyle ou un groupe cycloalkyle en C₃-₁₂, et n est 0, 1 ou 2, et (D) un agent d'amorçage de la polymérisation radicalaire ayant une température de décomposition de 40 à 90 °C pour obtenir une période de demi-réduction de 10 heures de telle sorte qu'il représente 0,01 à 5 parties en poids pour 100 parties en poids de la somme desdits monomères vinyliques (B) et dudit peroxyde organique polymérisable par voie radicalaire (C),
chauffage du mélange obtenu à une température inférieure à la température de décomposition dudit agent d'amorçage (D) jusqu'à ce que ledit polymère de l'éthylène (A) soit imprégné d'au moins 50 % en poids desdits monomères vinyliques (B), dudit peroxyde organique polymérisable par voie radicalaire (C) et dudit agent d'amorçage de la polymérisation (D), et
élévation de la température de cette suspension aqueuse pour provoquer la polymérisation desdits monomères vinyliques (B) et dudit peroxyde organique polymérisable par voie radicalaire (C) dans ledit polymère de l'éthylène (A), de telle sorte que le copolymère vinylique/peroxyde contienne de 0,01 à 0,73 % en poids d'oxygène actif,
ledit polymère formant le mélange avec ledit précurseur de polymérisation greffage étant, soit l'un, soit les deux éléments du groupe constitué (i) d'un homopolymère, copolymère de l'éthylène ou d'un mélange de ceux-ci et (ii) d'un polymère vinylique obtenu par polymérisation d'un ou plusieurs éléments du groupe constitué des monomères vinylaromatiques, des esters acryliques ou méthacryliques monomères ou de mélanges de ceux-ci, du méthacrylonitrile, de l'acrylonitrile ou de mélanges de ceux-ci et des esters vinyliques monomères.

2. Procédé selon la revendication 1, dans lequel ledit polymère de l'éthylène (A) est un polymère de l'éthylène basse densité, ayant une densité de 0,910 à 0,935 g/cm³.

3. Procédé selon la revendication 1, dans lequel ledit polymère de l'éthylène (A) est un copolymère de l'éthylène contenant des groupes époxy obtenu par copolymérisation de l'éthylène et d'un ester glycidylique acrylique ou méthacrylique ou de mélanges de ceux-ci.

4. Procédé selon la revendication 3, dans lequel ledit copolymère de l'éthylène contenant des groupes époxy est obtenu par copolymérisation de 60 à 99,5 % en poids d'éthylène et de 0,5 à 40 % en poids d'ester glycidylique acrylique ou méthacrylique, ou de mélanges de ceux-ci.

5. Procédé selon la revendication 1, dans lequel ledit polymère de l'éthylène (A) est composé d'éthylène et d'un ester acrylique ou méthacrylique ou de mélanges de ceux-ci.

6. Procédé selon la revendication 5, dans lequel ledit polymère de l'éthylène (A) est composé de 50 à 99 % en poids d'éthylène et de 50 à 1 % en poids d'ester acrylique ou méthacrylique ou de mélanges de ceux-ci.

7. Procédé selon la revendication 1, dans lequel ledit polymère de l'éthylène (A) est composé d'éthylène et d'un ester vinylique.

8. Procédé selon la revendication 7, dans lequel ledit ester vinylique est l'acétate de vinyle.

9. Procédé selon la revendication 7, dans lequel ledit polymère de l'éthylène (A) est un composé de 50 à 99 % en poids d'éthylène et de 50 à 1 % en poids d'un ester vinylique.

10. Procédé selon la revendication 1, dans lequel ledit polymère de l'éthylène (A) est un caoutchouc de copolymère éthylène-propylène.

11. Procédé selon la revendication 1, dans lequel ce polymère de l'éthylène (A) est un caoutchouc de copolymère éthylène-propylène-diène.

12. Procédé selon la revendication 1, dans lequel ledit polymère malaxé avec ledit précurseur de polymérisation greffage a la même composition en monomère que le polymère de l'éthylène dans ledit précurseur de polymérisation greffage.

13. Procédé selon la revendication 2, dans lequel ledit polymère malaxé avec ledit précurseur de polymérisation greffage est un polymère de l'éthylène basse densité ayant la même densité que le polymère de l'éthylène basse densité dans ledit précurseur de polymérisation greffage.

14. Procédé selon la revendication 1, dans lequel au moins 50 % en poids dudit monomère ou desdits monomères vinyliques utilisés pour la préparation dudit précurseur de polymérisation greffage est constitué d'un ou plusieurs monomères vinylaromatiques.

15. Procédé selon la revendication 1 dans lequel au moins 50 % en poids dudit ou desdits monomères vinyliques utilisés pour la préparation dudit précurseur de polymérisation greffage est constitué d'un ou plusieurs monomères acryliques ou méthacryliques.

16. Procédé selon la revendication 1, dans lequel ledit polymère malaxé avec ledit précurseur de polymérisation greffage a la même composition en monomères que ledit ou lesdits monomères vinyliques dans ledit précurseur de polymérisation greffage.
